# EUROPEAN PATENT APPLICATION

(11) **EP 4 478 763 A1**
(43) Date of publication of application: **18.12.2024**
(21) Application number: 23765700.2
(22) Date of filing: 08.02.2023
(51) Int. Cl.: H04W 12/08

(54) **COMMUNICATION METHOD AND APPARATUS**

(30) Priority: 07.03.2022 CN 202210216217
(71) Applicant: Huawei Technologies Co., Ltd., Shenzhen, Guangdong 518129 (CN)
(72) Inventor: WANG, Donghui, Shenzhen, Guangdong 518129 (CN); LIU, Fei, Shenzhen, Guangdong 518129 (CN); TAN, Wei, Shenzhen, Guangdong 518129 (CN)
(74) Representative: Isarpatent
(86) International application number: PCT/CN2023/074964
(87) International publication number: WO 2023/169122

(57) **Abstract**

Embodiments of this application provide a communication method and apparatus. The method is applied to a communication system including at least one blockchain. The method includes: A first network element receives an access request from a second network element, where the access request is used to request to access a first blockchain, and the access request includes an identifier of the first blockchain. The first network element sends an access response to the second network element, where the access response indicates whether the second network element can access the first blockchain, the first network element has a function of authorizing and managing the second network element to access a blockchain, and the second network element is a core network element other than the first network element in the communication system. The access request is used to request to access the first blockchain, so that the second network element accesses the blockchain in a scenario in which the communication system including the second network element and the first network element is integrated with the blockchain, and an operator can establish a secure and tamper-proof data sharing platform for the second network element by using the blockchain.

## Description

This application claims priority to Chinese Patent Application No. 202210216217.0, filed with the China National Intellectual Property Administration on March 7, 2022 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

A blockchain technology is a distributed ledger that integrates a plurality of technologies such as a cryptography technology, a peer-to-peer (peer-to-peer, P2P) network, and a distributed database. As an open and transparent decentralization technology, the blockchain technology transforms a center of authority and central trust in a conventional technology into a group consensus and decentralized trust, builds a distributed ledger that is guaranteed by the cryptography technology and that cannot be tampered with, and further provides smart contracts to automatically execute digital transactions.

The blockchain technology essentially changes the trust logic of human society. Applying a blockchain to a 6th generation (6th generation, 6G) mobile communication system can enhance security and trustworthiness of 6G. Depending on features of the blockchain technology, the blockchain can be used as a unified trusted platform to implement historical event tracing and automatic network management. For example, in a scenario in which the blockchain is integrated with the 6G system, when a core network device can access the blockchain, the blockchain may provide the core network device with information related to the core network device.

It can be learned from the foregoing descriptions that integration of the blockchain and the 6G system can enhance communication. In a scenario in which a blockchain technology is integrated with a communication system (for example, a 6G system), how a core network device accesses a blockchain becomes an urgent problem to be resolved.

### SUMMARY

Embodiments of this application provide a communication method, to support a core network device in a communication system to access a blockchain, thereby helping an operator establish a secure and tamper-proof data sharing platform for the core network device by using the blockchain.

According to a first aspect, a communication method is provided. The method may be performed by a first network element, or may be performed by a component (for example, a chip or a circuit) of the first network element. This is not limited herein. For ease of description, the following uses an example in which the method is performed by the first network element for description.

The method is applied to a communication system including at least one blockchain. The method includes: The first network element receives an access request from a second network element, where the access request is used to request to access a first blockchain, and the access request includes an identifier of the first blockchain. The first network element sends an access response to the second network element, where the access response includes information used to verify whether the second network element can access the first blockchain, the first network element has a function of authorizing and managing the second network element to access a blockchain, and the second network element is a core network element other than the first network element in the communication system.

Based on the foregoing technical solution, in a system in which the blockchain is integrated with the communication system, when the second network element needs to access the first blockchain, the second network element may send the access request to the first network element to request to access the first blockchain, so that the second network element accesses the blockchain in a scenario in which the communication system including the second network element and the first network element is integrated with the blockchain, thereby helping an operator establish a secure and tamper-proof data sharing platform for the second network element by using the blockchain.

With reference to the first aspect, in some implementations of the first aspect, the method further includes: The first network element generates the information used to verify whether the second network element can access the first blockchain.

With reference to the first aspect, in some implementations of the first aspect, the method further includes: The first network element determines whether the second network element has permission to access information about the first blockchain.

For example, the first network element may determine whether the second network element can access the first blockchain, thereby improving security assurance.

With reference to the first aspect, in some implementations of the first aspect, when the second network element has the permission to access the information about the first blockchain, the method further includes: The first network element receives a read request from the second network element, where the read request is used to request to obtain first data on the first blockchain, and the read request includes the identifier of the first blockchain. The first network element sends the read request to the first blockchain. The first network element receives the first data from the first blockchain. The first network element sends the first data to the second network element.

Based on the foregoing technical solution, when the second network element can access the first blockchain, the second network element may send the read request to the first network element to request to read the first data on the first blockchain, so that the first blockchain provides data for the second network element.

With reference to the first aspect, in some implementations of the first aspect, the read request further includes at least one of the following information: an identifier of a transaction, an identifier of a block, or an identifier of an account.

Further, the read request may further include more information, so as to more accurately determine an object that needs to be accessed. For example, the read request carries an identifier of a transaction, so that the first network element determines that the second network element needs to access the transaction.

With reference to the first aspect, in some implementations of the first aspect, when the second network element has the permission to access the information about the first blockchain, the method further includes: The first network element receives second data from the second network element. The first network element sends the second data to the first blockchain.

Based on the foregoing technical solution, when the second network element can access the first blockchain, the second network element may send the second data to the first blockchain, so that data of the second network element is on-chained.

With reference to the first aspect, in some implementations of the first aspect, before the first network element sends the second data to the first blockchain, the method further includes: The first network element determines that the second network element has permission to send the second data to the first blockchain.

For example, the first network element may determine whether the second network element can send data to the first blockchain, thereby improving security assurance.

With reference to the first aspect, in some implementations of the first aspect, the method further includes: The first network element receives a first request from a first device, where the first request is used to request to register the first blockchain with the first network element, and the first request includes information about the first blockchain. The first network element sends a first response to the first device, where the first response indicates that the registration of the first blockchain succeeds or fails, where the information about the first blockchain includes at least one of the following: the identifier of the first blockchain, an address of the first blockchain, an authentication mechanism of the first blockchain, a member of the first blockchain, a type of the first blockchain, a type of data stored on the first blockchain, a status of the first blockchain, a policy and configuration corresponding to a core network element, a policy and configuration corresponding to a terminal device, or a policy and configuration corresponding to a third-party device.

Based on the foregoing technical solution, in the system in which the blockchain is integrated with the communication system, the first device may register the information about the first blockchain with the first network element by using the first request, so that the first network element manages the first blockchain.

With reference to the first aspect, in some implementations of the first aspect, the method further includes: The first network element receives a second request from the first device, where the second request is used to request to update the information about the first blockchain or delete the information about the first blockchain, where when the second request is used to request the first network element to update the information about the first blockchain, the second request includes updated information about the first blockchain; or when the second request is used to request the first network element to delete the information about the first blockchain, the second request includes the identifier of the first blockchain.

Based on the foregoing technical solution, the information about the first block link registered with the first network element may be updated or deleted, thereby improving solution flexibility.

With reference to the first aspect, in some implementations of the first aspect, the method further includes: The first network element sends a first query message to the first device, where the first query message is used to query the status of the first blockchain.

Based on the foregoing technical solution, in the system in which the blockchain is integrated with the communication system, that the information about the first blockchain is registered with the first network element may be actively initiated by the first network element by using the first query message, so as to improve initiative of the first network element.

With reference to the first aspect, in some implementations of the first aspect, the method further includes: The first network element receives a second query message from a third network element, where the second query message is used to query the information about the first blockchain, and the second query message includes the identifier of the first blockchain. The first network element sends, to the third network element, the information about the first blockchain, or information indicating that the query fails.

Based on the foregoing technical solution, the third network element may send the second query message to the first network element to query the information about the first blockchain that is stored in the first network element.

With reference to the first aspect, in some implementations of the first aspect, the method further includes: The first network element determines whether the third network element has permission to query the information about the first blockchain.

For example, the first network element may determine whether the third network element can query the information about the first blockchain, thereby improving security assurance.

With reference to the first aspect, in some implementations of the first aspect, the method further includes: The first network element receives a subscription message from the third network element, where the subscription message is used to subscribe to the information about the first blockchain, and the subscription message includes the identifier of the first blockchain. The first network element sends a notification message to the third network element, where the notification message includes the updated information about the first blockchain, or includes information indicating that the subscription fails.

Based on the foregoing technical solution, the third network element may send the subscription message to the first network element to subscribe to the information about the first blockchain that is stored in the first network element, so that the third network element can learn in time when the information about the first blockchain is updated.

With reference to the first aspect, in some implementations of the first aspect, the method further includes: The first network element determines whether the third network element has permission to subscribe to the information about the first blockchain.

For example, the first network element may determine whether the third network element can subscribe to the information about the first blockchain, thereby improving security assurance.

With reference to the first aspect, in some implementations of the first aspect, the method further includes: The first network element sends a first configuration message to the third network element, where the first configuration message includes at least one of the following information: an identifier corresponding to a first configuration, the identifier of the first blockchain, an identifier of the third network element, the address of the first blockchain, a format of the first data, or a type of the first data.

Based on the foregoing technical solution, the third network element may be configured by using the first configuration message, so that data is transmitted between the third network element and the first blockchain.

With reference to the first aspect, in some implementations of the first aspect, the information about the first blockchain includes the first configuration message, or the method further includes: The first network element generates the first configuration message based on the information about the first blockchain.

Based on the foregoing technical solution, the first network element may learn of the first configuration message because the information about the first blockchain includes the first configuration message, or the first network element may determine the first configuration message based on other information included in the information about the first blockchain. A manner in which the first network element learns of the first configuration message is not limited, thereby improving solution flexibility.

With reference to the first aspect, in some implementations of the first aspect, the method further includes: The first network element receives first indication information from the third network element, where the first indication information indicates that the first configuration succeeds or fails; and when the first indication information indicates that the first configuration succeeds, the method further includes: The first network element sends a third response to the first blockchain, where the third response includes information about the third network element; or when the first indication information indicates that the first configuration fails, the method further includes: The first network element sends a third response to the first blockchain, where the third response indicates that the configuration fails.

With reference to the first aspect, in some implementations of the first aspect, the method further includes: The first network element sends second indication information to the third network element; or the first network element receives the second indication information from the third network element, where the second indication information indicates any one of the following: indicating to update the first configuration, indicating to cancel the first configuration, indicating to suspend the first configuration, or indicating to restore the first configuration.

For example, an operation such as updating or pausing may be performed on the first configuration by using the second indication information, to improve configuration flexibility.

According to a second aspect, a communication method is provided. The method may be performed by a second network element, or may be performed by a component (for example, a chip or a circuit) of the second network element. This is not limited herein. For ease of description, the following uses an example in which the method is performed by the second network element for description.

The method is applied to a communication system including at least one blockchain. The method includes: The second network element sends an access request to a first network element, where the access request is used to request to access a first blockchain, and the access request includes an identifier of a third network element and an identifier of the first blockchain. The second network element receives an access response from the first network element, where the access response includes information used to verify whether the second network element can access information about the first blockchain, where the first network element has a function of authorizing and managing the second network element to access a blockchain, and the second network element is a core network element other than the first network element in the communication system.

With reference to the second aspect, in some implementations of the second aspect, the method further includes: The second network element sends a read request to the first network element, where the read request is used to request to obtain first data on the first blockchain, and the read request includes the identifier of the first blockchain. The second network element receives the first data from the first network element.

With reference to the second aspect, in some implementations of the second aspect, the read request further includes at least one of the following information: an identifier of a transaction, an identifier of a block, or an identifier of an account.

With reference to the second aspect, in some implementations of the second aspect, the method further includes: The second network element sends second data to the first network element.

With reference to the second aspect, in some implementations of the second aspect, the method further includes: The second network element sends a third request to the first blockchain, where the third request is used to request to obtain the first data on the first blockchain, or is used to request to send the second data to the first blockchain. The second network element receives a third response from the first blockchain, where the third response indicates that the third request succeeds or fails, where the third request includes at least one of the following information: an identifier of the second network element, the identifier of the first blockchain, a type of the third request, an expiration time of the third request, or signature information of the third request.

With reference to the second aspect, in some implementations of the second aspect, the method further includes: The second network element sends second data to the first network element.

For beneficial effects of the method shown in the second aspect and the possible designs of the second aspect, refer to the beneficial effects in the first aspect and the possible designs of the first aspect.

According to a third aspect, a communication method is provided. The method may be performed by a first blockchain, or may be performed by a component (for example, a chip or a circuit) of the first blockchain. This is not limited herein. For ease of description, the following uses an example in which the method is performed by the first blockchain for description.

The method is applied to a communication system including at least one blockchain. The method includes: The first blockchain receives a third request from a second network element, where the third request is used to request to obtain first data on the first blockchain, or is used to request to send second data to the first blockchain. The first blockchain verifies the third request to determine whether the second network element has permission to obtain the first data on the first blockchain, or determine whether the second network element has permission to send the second data to the first blockchain. The first blockchain sends a third response to the second network element, where the third response indicates that the third request succeeds or fails, where the third request includes at least one of the following information: an identifier of the second network element, an identifier of the first blockchain, a type of the third request, an expiration time of the third request, or signature information of the third request.

Based on the foregoing technical solution, in a system in which a blockchain is integrated with the communication system, when the second network element needs to access the first blockchain, the second network element may send the third request to the first blockchain to request to access the first blockchain, so that the second network element can access the blockchain, and the first blockchain can verify whether the second network element has permission to access the first blockchain, thereby ensuring security.

According to a fourth aspect, a communication method is provided. The method may be performed by a first device, or may be performed by a component (for example, a chip or a circuit) of the first device. This is not limited herein. For ease of description, the following uses an example in which the method is performed by the first device for description.

The method is applied to a communication system including at least one blockchain. The method includes: The first device sends a first request to a first network element, where the first request is used to request to register a first blockchain with the first network element, and the first request includes information about the first blockchain. The first device receives a first response from the first network element, where the first response indicates that the registration of the first blockchain succeeds or fails, where the information about the first blockchain includes at least one of the following: an identifier of the first blockchain, an address of the first blockchain, an authentication mechanism of the first blockchain, a member of the first blockchain, a type of the first blockchain, a type of data stored on the first blockchain, a status of the first blockchain, a policy and configuration corresponding to a core network element, a policy and configuration corresponding to a terminal device, or a policy and configuration corresponding to a third-party device.

With reference to the fourth aspect, in some implementations of the fourth aspect, the method further includes: The first device sends a second request to the first network element, where the second request is used to request to update the information about the first blockchain or delete the information about the first blockchain, where when the second request is used to request the first network element to update the information about the first blockchain, the second request includes updated information about the first blockchain; or when the second request is used to request the first network element to delete the information about the first blockchain, the second request includes the identifier of the first blockchain.

With reference to the fourth aspect, in some implementations of the fourth aspect, the method further includes: The first device receives a first query message from the first network element, where the first query message is used to query the status of the first blockchain.

For beneficial effects of the method shown in the fourth aspect and the possible designs of the fourth aspect, refer to the beneficial effects in the first aspect and the possible designs of the first aspect.

According to a fifth aspect, a communication method is provided. The method may be performed by a third network element, or may be performed by a component (for example, a chip or a circuit) of the third network element. This is not limited herein. For ease of description, the following uses an example in which the method is performed by the third network element for description.

The method is applied to a communication system including at least one blockchain. The method includes: The third network element sends a second query message to a first network element, where the second query message is used to query information about a first blockchain, and the second query message includes an identifier of the first blockchain. The third network element receives, from the first network element, the information about the first blockchain, or information indicating that the query fails.

For beneficial effects of the method shown in the fifth aspect, refer to the beneficial effects in the first aspect and the possible designs of the first aspect.

According to a sixth aspect, a communication method is provided. The method may be performed by a third network element, or may be performed by a component (for example, a chip or a circuit) of the third network element. This is not limited herein. For ease of description, the following uses an example in which the method is performed by the third network element for description.

The method is applied to a communication system including at least one blockchain. The method includes: The third network element sends a subscription message to a first network element, where the subscription message is used to subscribe to information about a first blockchain, and the subscription message includes an identifier of the first blockchain. The third network element receives a notification message from the first network element, where the notification message includes updated information about the first blockchain, or includes information indicating that the subscription fails.

For beneficial effects of the method shown in the sixth aspect, refer to the beneficial effects in the first aspect and the possible designs of the first aspect.

According to a seventh aspect, a communication method is provided. The method may be performed by a second network element, or may be performed by a component (for example, a chip or a circuit) of the second network element. This is not limited herein. For ease of description, the following uses an example in which the method is performed by the second network element for description.

The method is applied to a communication system including at least one blockchain. The method includes: The second network element receives a first configuration message from a first network element, where the first configuration message includes at least one of the following information: an identifier corresponding to a first configuration, an identifier of a first blockchain, an identifier of the second network element, an address of the first blockchain, a format of first data, or a type of the first data.

With reference to the seventh aspect, in some implementations of the seventh aspect, the method further includes: The second network element sends first indication information to the first network element, where the first indication information indicates that the first configuration succeeds or fails.

With reference to the seventh aspect, in some implementations of the seventh aspect, the method further includes: The second network element receives second indication information from the first network element; or the second network element sends the second indication information to the first network element, where the second indication information indicates any one of the following: indicating to update the first configuration, indicating to cancel the first configuration, indicating to suspend the first configuration, or indicating to restore the first configuration.

For beneficial effects of the method shown in the seventh aspect and the possible designs of the seventh aspect, refer to the beneficial effects in the first aspect and the possible designs of the first aspect.

According to an eighth aspect, a communication apparatus is provided. The communication apparatus is configured to perform the method provided in the first aspect. Specifically, the communication apparatus may include a unit and/or a module configured to perform the method provided in any one of the foregoing implementations of the first aspect, for example, a processing unit and an obtaining unit.

In an implementation, the transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on the chip, a chip system, or a circuit. The processing unit may be at least one processor, a processing circuit, a logic circuit, or the like.

According to a ninth aspect, a communication apparatus is provided. The apparatus is configured to perform the method provided in the second aspect. Specifically, the communication apparatus may include a unit and/or a module configured to perform the method provided in the second aspect, for example, a processing unit and an obtaining unit.

In an implementation, the transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on the chip, a chip system, or a circuit. The processing unit may be at least one processor, a processing circuit, a logic circuit, or the like.

According to a tenth aspect, a communication apparatus is provided. The apparatus is configured to perform the method provided in the third aspect. Specifically, the communication apparatus may include a unit and/or a module configured to perform the method provided in the third aspect, for example, a processing unit and an obtaining unit.

In an implementation, the transceiver unit may be a transceiver or an input/output interface, and the processing unit may be at least one processor. Optionally, the transceiver may be a transceiver circuit. Optionally, the input/output interface may be an input/output circuit.

According to an eleventh aspect, a communication apparatus is provided. The apparatus is configured to perform the method provided in the fourth aspect. Specifically, the communication apparatus may include a unit and/or a module configured to perform the method provided in the fourth aspect, for example, a processing unit and an obtaining unit.

In an implementation, the transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on the chip, a chip system, or a circuit. The processing unit may be at least one processor, a processing circuit, a logic circuit, or the like.

In another implementation, the transceiver unit may be an input/output interface, an interface circuit, an output circuit, an input circuit, a pin, a related circuit, or the like on the chip, a chip system, or a circuit. The processing unit may be at least one processor, a processing circuit, a logic circuit, or the like.

According to a twelfth aspect, a communication apparatus is provided. The apparatus is configured to perform the methods provided in the fifth aspect to the seventh aspect. Specifically, the communication apparatus may include a unit and/or a module configured to perform the methods provided in the fifth aspect to the seventh aspect, for example, a processing unit and an obtaining unit.

In an implementation, the transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on the chip, a chip system, or a circuit. The processing unit may be at least one processor, a processing circuit, a logic circuit, or the like.

In another implementation, the transceiver unit may be an input/output interface, an interface circuit, an output circuit, an input circuit, a pin, a related circuit, or the like on the chip, a chip system, or a circuit. The processing unit may be at least one processor, a processing circuit, a logic circuit, or the like.

According to a thirteenth aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a fourteenth aspect, a computer-readable storage medium is provided. The computer-readable storage medium stores program code executed by a device, and the program code is used to perform the methods provided in the foregoing aspects.

According to a fifteenth aspect, a computer program product including instructions is provided. When the computer program product runs on a computer, the computer is enabled to perform the methods provided in the foregoing aspects.

According to a sixteenth aspect, a chip is provided. The chip includes a processor and a communication interface, and the processor reads, through the communication interface, instructions stored in a memory, to perform the methods provided in the foregoing aspects.

Optionally, in an implementation, the chip further includes the memory. The memory stores a computer program or the instructions. The processor is configured to execute the computer program or the instructions stored in the memory. When the computer program or the instructions are executed, the processor is configured to perform the methods provided in the foregoing aspects.

According to a seventeenth aspect, a communication system is provided, including the communication apparatus in the eighth aspect, the communication apparatus in the ninth aspect, the communication apparatus in the tenth aspect, the communication apparatus in the eleventh aspect, and the communication apparatus in the twelfth aspect.

### BRIEF DESCRIPTION OF DRAWINGS

FIG. 1 is a diagram of a communication system to which an embodiment of this application is applicable;
FIG. 2 is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a schematic flowchart of still another communication method according to an embodiment of this application;
FIG. 6 is a schematic flowchart of still another communication method according to an embodiment of this application;
FIG. 7 is a schematic flowchart of still another communication method according to an embodiment of this application;
FIG. 8 is a schematic flowchart of still another communication method according to an embodiment of this application;
FIG. 9 is a schematic flowchart of still another communication method according to an embodiment of this application;
FIG. 10 is a block diagram of a communication apparatus according to an embodiment of this application; and
FIG. 11 is a block diagram of another communication apparatus according to an embodiment of this application.

### DESCRIPTION OF EMBODIMENTS

The following describes technical solutions of embodiments in this application with reference to accompanying drawings.

The technical solutions in embodiments of this application may be applied to a communication system in which a blockchain is integrated with a current existing communication network or a future communication network. The current existing communication network or the future communication network includes but is not limited to: a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, a device-to-device (device-to-device, D2D) communication system, a vehicle-to-everything (vehicle-to-everything, V2X) communication system, a machine-to-machine (machine-to-machine, M2M) communication system, a machine type communication (machine type communication, MTC) system, an internet of things (internet of things, IoT) communication system, a 6th generation (6th generation, 6G) mobile communication system, or the like.

For ease of understanding of embodiments of this application, the following briefly describes a communication system to which embodiments of this application are applicable by using an example in which a blockchain is integrated with a 6G communication network.

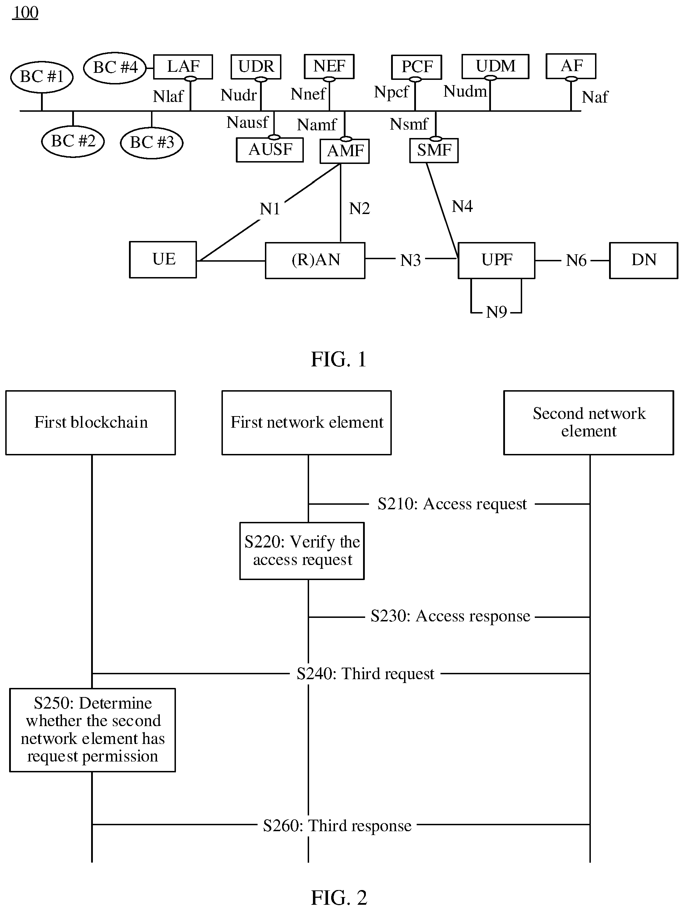

The technical solutions in embodiments of this application may be applied to a network architecture in which a blockchain is integrated with a 6G communication network shown in FIG. 1, or certainly may be applied to a network architecture in which a blockchain is integrated with a future communication network, for example, the network architecture in which the blockchain is integrated with the future communication network. This is not specifically limited in embodiments of this application.

With reference to FIG. 1, the following describes, by using an example, a communication system in which a blockchain is integrated with a 6G communication network and to which embodiments of this application are applicable. It should be understood that the 6G system described in this specification is merely an example, and should not constitute any limitation on this application.

It should be further understood that some network elements in the 6G system may communicate with each other through a service-oriented interface or a point-to-point interface. The following describes a 6G system framework based on a service-oriented interface with reference to FIG. 1.

For example, FIG. 1 is a diagram of an architecture of a communication system 100 in which a blockchain is integrated with a 6G communication network and to which an embodiment of this application is applicable. The network architecture may include but is not limited to the following network elements (or referred to as functional network elements, functional entities, nodes, devices, or the like):
user equipment (user equipment, UE), a (radio) access network (radio access network, (R)AN) device, a 6G core network (6G core, 6GC), a data network (data network, DN), and a blockchain (blockchain, BC), where the 6GC includes but is not limited to the following network elements:
an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, an authentication server function (authentication server function, AUSF), a unified data management (unified data management, UDM), a network exposure function (network exposure function, NEF) network element, a unified data repository (unified data repository, UDR), a ledger anchor function (Ledger anchor function, LAF) network element, and the like.

The following briefly describes the network elements shown in FIG. 1.
1. UE: The UE is a terminal that communicates with a (R)AN, and may also be referred to as a terminal device (terminal equipment), an access terminal, a subscriber unit, a subscriber station, a mobile console, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides voice/data connectivity for a user, for example, a handheld device or a vehicle-mounted device having a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, an unmanned aerial vehicle, a terminal device in a 6G network, or a terminal device in a future evolved public land mobile network (public land mobile network, PLMN).

In addition, the terminal device may alternatively be a terminal device in an internet of things (Internet of things, IoT) system. IoT is an important part of development of information technologies in the future, and has a main technical feature of connecting things to a network by using a communication technology, to implement an intelligent network for human-machine interconnection and thing-thing interconnection. The IoT technology can achieve massive connections, deep coverage, and terminal power saving by using, for example, a narrowband (narrowband, NB) technology.

It should be understood that the terminal device may be any device that can access a network. The terminal device and an access network device may communicate with each other by using a specific air interface technology.

Optionally, the user equipment may be configured to serve as a base station. For example, the user equipment may serve as a scheduling entity that provides a sidelink signal between user equipments in V2X or D2D. For example, a cellular phone and an automobile communicate with each other via a sidelink signal. The cellular phone communicates with a smart home device without relaying a communication signal by a base station.

2. (R)AN: The (R)AN is configured to provide a network access function for authorized user equipment in a specific area, and can use transmission tunnels of different quality of service based on a level of the user equipment, a service requirement, and the like.

The (R)AN can manage radio resources and provide an access service for user equipment, to forward a control signal and user equipment data between the user equipment and a core network. The (R)AN may also be understood as a base station in a conventional network.

For example, the access network device in embodiments of this application may be any communication device that has a wireless transceiver function and that is configured to communicate with the user equipment. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), an access point (access point, AP) in a wireless fidelity (wireless fidelity, Wi-Fi) system, a radio relay node, a radio backhaul node, a transmission point (transmission point, TP) or a transmission and reception point (transmission and reception point, TRP), a satellite, a terminal device that undertakes a base station function in D2D communication, and the like.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in the radio access network (radio access network, RAN), or the CU may be classified as an access network device in the core network (core network, CN). This is not limited in this application.

3. User plane network element: The user plane network element is configured to perform packet routing and forwarding, quality of service (quality of service, QoS) handling for user plane data, and the like.

As shown in FIG. 1, in the 6G communication system, the user plane network element may be a UPF network element, and may include an intermediate user plane function (intermediate user plane function, I-UPF) network element and a PDU Session anchor user plane function (PDU Session anchor user plane function, PSA-UPF) network element. In a future communication system, the user plane network element may still be the UPF network element, or may have another name. This is not limited in this application.

4. Data network: The data network is configured to provide a network for data transmission.

In a future communication system, the data network may still be a DN, or may have another name. This is not limited in this application.

In the 6G communication system, after accessing a network, a terminal device may establish a protocol data unit (protocol data unit, PDU) session, access the DN by using the PDU session, and interact with an application function network element (the application function network element is, for example, an application server) deployed in the DN. As shown in FIG. 1, based on different DNs accessed by a user, the network may select a UPF that accesses the DN as a PDU session anchor (PDU Session Anchor, PSA) according to a network policy, and access the application function network element through an N6 interface of the PSA.

5. Access and mobility management network element: The access and mobility management network element is mainly configured to perform mobility management, access management, and the like, and may be configured to implement functions, for example, lawful intercept and access authorization/authentication, other than session management in functions of a mobility management network element (mobility management entity, MME).

As shown in FIG. 1, in the 6G communication system, the access management network element may be an AMF network element. In a future communication system, the access management network element may still be the AMF network element, or may have another name. This is not limited in this application.

6. Session management network element: The session management network element is mainly configured to: perform session management internet protocol (internet protocol, IP) address allocation and management of a terminal device, selection and management of a user plane function of the terminal device, termination of interfaces towards policy control and charging functions, downlink data notification, and the like.

As shown in FIG. 1, in the 6G communication system, the session management network element may be an SMF network element, and may include an intermediate session management function (intermediate session management function, I-SMF) network element and an anchor session management function (anchor session management function, A-SMF) network element. In a future communication system, the session management network element may still be the SMF network element, or may have another name. This is not limited in this application.

7. Policy control network element: The policy control network element is configured to: support a unified policy framework to govern network behavior, provide policy rule information for a control plane function network element (for example, an AMF or SMF network element), and the like.

In a 4G communication system, the policy control network element may be a policy and charging rules function (policy and charging rules function, PCRF) network element. As shown in FIG. 1, in the 6G communication system, the policy control network element may be a PCF network element. In a future communication system, the policy control network element may still be the PCF network element, or may have another name. This is not limited in this application.

8. Data management network element: The data management network element is configured to perform identification handling of a terminal device, access authentication, registration, and mobility management, and the like.

As shown in FIG. 1, in the 6G communication system, the data management network element may be a UDM network element or a UDR network element. In a future communication system, the unified data management may still be the UDM network element or the UDR network element, or may have another name. This is not limited in this application.

The UDM network element or the UDR network element in embodiments of this application may be a user database, and may be used as a single logical repository for storing user data.

9. Application function network element: The application function network element may interact with the 6G system through an application function network element, and is configured to access a network exposure function network element or interact with a policy framework for policy control.

As shown in FIG. 1, in the 6G communication system, the application function network element may be an application function, AF network element. In a future communication system, the application function network element may still be the AF network element, or may have another name. This is not limited in this application.

10. Authentication server network element: The authentication server network element is configured to: perform an authentication service, generate a key to implement two-way authentication on a terminal device, and support a unified authentication framework.

As shown in FIG. 1, in the 6G communication system, the authentication server network element may be an AUSF network element. In a future communication system, the authentication server network element may still be the AUSF network element, or may have another name. This is not limited in this application.

11. Network exposure function network element: The network exposure function network element is configured to provide a customized network exposure function.

As shown in FIG. 1, in the 6G communication system, the network exposure function network element may be a network exposure function (network exposure function, NEF) network element. In a future communication system, the network exposure function network element may still be the NEF network element, or may have another name. This is not limited in this application.

The 6G communication system may further expose a capability supported by a 6GC to an external application function network element through the NEF network element, for example, a capability of providing small data transfer.

12. Ledger anchor function network element: As an interface between a communication network and a blockchain, the ledger anchor function network element is responsible for authorization and management of access and writing of a terminal device to a blockchain. An operator may mount different blockchain nodes on a bus. As an overall management anchor, the ledger anchor function network element is responsible for three functions: secondary authentication and authorization of access of the terminal device to the blockchain, on-chain configuration of the terminal device, and information on-chain processing of the terminal device.

13. Blockchain: Transactions on a network are generated and stored in blocks, and are linked to a chained structure in a chronological order. Confirmed and proven transactions on the network are linked from a start block to a latest block of the blockchain, and a ledger formed by linking a plurality of blocks is referred to as the blockchain.

A blockchain technology implements a chained data structure formed by sequentially linking data and information blocks in a chronological order, and implements distributed storage that cannot be tampered with and cannot be forged in a cryptographic manner. Generally, data and information in the blockchain are referred to as "transactions (Transactions)".

The blockchain technology is not a single technology, but a system that integrates application of peer-to-peer transmission, a consensus mechanism, distributed data storage, and a cryptography principle. The system has technical features of being fully open and tamper-proof.
(1) Peer-to-peer transmission: Nodes participating in the blockchain are independent and peer-to-peer, and synchronization of data and information is implemented between nodes by using a peer-to-peer transmission technology. The nodes may be different physical machines, or may be different instances on a cloud.
(2) Consensus mechanism: The consensus mechanism in the blockchain is a process in which nodes from a plurality of participants reach an agreement on specific data and information through interaction between nodes according to a preset logical rule. The consensus mechanism needs to depend on a well-designed algorithm. Therefore, different consensus mechanisms have different performance (for example, transactions per second (transactions per second, TPS), delays in reaching a consensus, consumed computing resources, and consumed transmission resources).
(3) Distributed data storage: The distributed storage in the blockchain means that nodes participating in the blockchain each store independent and complete data, ensuring that the data storage is fully open among the nodes. Different from conventional distributed data storage in which data is divided into a plurality of copies for backup or synchronous storage according to a specific rule, the distributed data storage in the blockchain implements highly consistent data storage based on a consensus between peer-to-peer and independent nodes in the blockchain.
(4) Cryptography principle: The blockchain usually implements trusted information dissemination, verification, and the like based on an asymmetric encryption technology.

A concept of "block" is to organize one or more data records in a form of a "block", and a size of the "block" may be customized based on an actual application scenario. A "chain" is a data structure, and the data structure connects "blocks" that store data records in a chronological order by using a hash technology. In the blockchain, each "block" includes two parts: a "block header" and a "block body". The "block body" includes transaction records packed into the "block". The "block header" includes root hashes of all transactions in the "block" and hashes in a previous "block". The data structure of the blockchain ensures that data stored on the blockchain cannot be tampered with.

Currently, blockchains can be classified into three categories: public blockchains, consortium blockchains, and private blockchains.

The public chain means that any archive node (peer) may be used as a consensus node (which may also be referred to as a consensus computing node) of the blockchain, to participate in consensus computing of data storage in the blockchain and maintain the blockchain anonymously, where nodes do not trust each other.

The consortium blockchain has added admission permission on the basis of the public chain, so that only a qualified node can be used as a consensus computing node of the blockchain, to participate in consensus computing of data storage in the blockchain and maintain the blockchain, where nodes trust each other to some extent.

Compared with the consortium blockchain, the private blockchain has a stricter admission mechanism, so that the blockchain and a consensus computing node of the blockchain are private.

For example, in a communication system in which a blockchain is integrated with 6G, the blockchain may be mounted on a bus, and communicate with a 6GC through a service-oriented interface, for example, a BC #1, a BC #2, and a BC #3 shown in FIG. 1. Alternatively, the blockchain may not be mounted on the bus, and communicates with an LAF through a communication interface, for example, a BC #4 shown in FIG. 1. That the blockchain is mounted on the bus may be understood as that at least one node on the blockchain communicates with the 6GC through the service-oriented interface. That the blockchain is not mounted on the bus, and communicates with the LAF through the communication interface may be understood as that at least one node on the blockchain communicates with the LAF through the communication interface.

As shown in FIG. 1, in the communication system in which a blockchain is integrated with 6G, the ledger anchor function network element may be an LAF. In a future communication system, the ledger anchor function network element may still be the LAF network element, or may have another name. This is not limited in this application.

It should be noted that the LAF may be an independently disposed functional network element, or may be a functional network element integrated with another functional network element. For example, a function of the AMF network element is enhanced, so that the AMF network element has a function of the LAF network element.

Interfaces between control plane network elements in FIG. 1 are service-oriented interfaces. Specifically, Nudr, Nausf, Nnef, Namf, Npcf, Nsmf, Nudm, Naf, and Nlaf in FIG. 1 are respectively examples of service-oriented interfaces exhibited by the UDR, AUSF, NEF, AMF, PCF, SMF, UDM, AF, and LAF, and are configured to invoke corresponding service-oriented operations. N1, N2, N3, N4, N9, and N6 are interface sequence numbers.
(1) N1: N1 is an interface between the AMF and the terminal, and may be configured to transfer a QoS control rule or the like to the terminal.
(2) N2: N2 is an interface between the AMF and the RAN, and may be configured to transfer radio bearer control information or the like from a core network side to the RAN.
(3) N3: N3 is an interface between the RAN and the UPF, and is mainly configured to transfer uplink and downlink user plane data between the RAN and the UPF.
(4) N4: N4 is an interface between the SMF and the UPF, and may be configured to transfer information between a control plane and a user plane, including delivering a forwarding rule, a QoS control rule, a traffic statistics rule, or the like from the control plane to the user plane, and reporting information on the user plane.
(5) N9: N9 is a user plane interface between UPFs, and is configured to transfer uplink and downlink user data flows between the UPFs.
(6) N6: N6 is an interface between the UPF and the DN, and is configured to transfer uplink and downlink user data flows between the UPF and the DN.

Specifically, for meanings of these interface sequence numbers, refer to meanings defined in the 3rd generation partnership project (3rd generation partnership project, 3GPP) standard protocol. This is not limited herein.

It may be understood that the foregoing network elements or functions may be network elements in a hardware device, may be software functions running on dedicated hardware, or may be virtualized functions instantiated on a platform (for example, a cloud platform). One or more services may be obtained through division into the foregoing network elements or functions. Further, services that exist independently of network functions may occur. In this application, instances of the functions, instances of the services included in the functions, or instances of the services that exist independently of the network functions may be referred to as service instances.

Further, the AF network element may be referred to as an AF for short, the LAF network element may be referred to as an LAF for short, and the AMF network element may be referred to as an AMF for short. That is, in the following of this application, the AF may be replaced with the application function network element, the LAF may be replaced with the ledger anchor function network element, and the AMF may be replaced with the access and mobility management network element.

It may be understood that the foregoing network elements or functional network elements may be network elements in a hardware device, may be software functions running on dedicated hardware, or may be virtualized functions instantiated on a platform (for example, a cloud platform). One or more services may be obtained through division into the foregoing network elements or functions. Further, services that exist independently of network functions may occur. In this application, instances of the functions, instances of the services included in the functions, or instances of the services that exist independently of the network functions may be referred to as service instances.

It should be understood that the network architecture to which embodiments of this application can be applied is merely an example for description, and the network architecture to which embodiments of this application are applicable is not limited thereto. Any network architecture that can implement functions of the foregoing network elements is applicable to embodiments of this application.

It should be further understood that the AMF, the SMF, the UPF, the PCF, the NEF, and the like shown in FIG. 1 may be understood as network elements configured to implement different functions, for example, may be combined into a network slice as required. These network elements may be independent devices, may be integrated into a same device to implement different functions, may be network elements in a hardware device, may be software functions running on dedicated hardware, or may be virtualized functions instantiated on a platform (for example, a cloud platform). Specific forms of the foregoing network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 6G, or may have other names.

It should be further understood that names of interfaces between the network elements in FIG. 1 are merely examples, and the interfaces may have other names during specific implementation. This is not specifically limited in this application. In addition, names of messages (or signaling) transmitted between the foregoing network elements are merely examples, and do not constitute any limitation on functions of the messages.

For ease of understanding of the technical solutions in embodiments of this application, some terms or concepts that may be used in embodiments of this application are first briefly described.
1. On-chain configuration: The on-chain configuration means that data that needs to be sent to a blockchain is configured by using a configuration message, for example, a data type.
2. Data on-chain: The data on-chain means that data is packed into a block according to a consensus mechanism to obtain a new block, and linked to a previous block to become data that cannot be tampered with on a chain.
3. Admission mechanism: A membership service provider (membership service provider, MSP) module on a blockchain node is responsible for identity management, and mainly completes functions such as digital certificate verification, signature and verification, and private key management. A smart contract can implement access control at a plurality of levels based on a digital certificate, an MSP ID, and an attribute field of an invoker.
4. Extensible authentication protocol (Extensible Authentication Protocol, EAP): The EAP is a set of authentication modes, and is designed to meet an authentication requirement of any link layer and support a plurality of link layer authentication modes. The EAP protocol is a core of an IEEE 802.1x authentication mechanism.

In an 802.1X-compliant wireless local area network, one user requests to access one access point, and the access point forces the user to enter an unauthorized state. In this state, the user can send only one EAP start message. Then, the access point returns one EAP message to the user, to request the user to perform authentication. The user sends the authentication to the access point, and then the access point forwards the authentication to an authentication server, so that the authentication server uses an algorithm to verify whether the user is authorized and returns an accept message or a reject message to the access point. When the authentication succeeds, that is, the accept message is received, the access point changes the status of the user to authorized. In this case, normal communication can be performed.

5. 6G communication network: A 6G network can be composed of air, sky, earth, and sea in space, and composed of a plurality of devices in device composition. An actual network carrier can be composed of platforms of low and medium-altitudes such as a satellite network and an unmanned aerial vehicle, a cellular network, internet of vehicles, an IoT network, a water surface network, and an underwater network. A 6G network terminal is an important part of supporting a 6G service application. The 6G network extends a form and a function of a 5G communication terminal. The 6G network terminal includes but is not limited to a vehicle, a cellular network terminal (integrated with a satellite terminal function), an unmanned aerial vehicle, and IoT. In addition, compared with the 5G network terminal, the 6G network terminal has an enhanced capability. For example, a computing capability and a communication capability of the vehicle are greatly improved, which can meet a basic requirement of blockchain running. In addition, a blockchain finely designed based on the 6G network can support more forms of terminals.

The 6G network features cross-industry and multi-device deep participation. Different devices in the network can provide different businesses and services. Different devices may belong to different operators rather than a single operator. Therefore, the 6G network requires a mechanism and platform for mutual trust between a plurality of parties.

A blockchain technology essentially changes the trust logic of human society, and can well meet the foregoing requirement of the 6G network.

The blockchain is a distributed ledger that integrates a plurality of technologies such as a cryptography technology, a P2P network, and a distributed database. The blockchain is a chained (chain) data structure formed by generating and storing data in blocks (block) and linking the data in a chronological order, where all nodes jointly participate in data verification, storage, and maintenance of a blockchain system. Therefore, creation of a new block needs to be confirmed by consensus, and is broadcast to all the nodes to implement network-wide synchronization. Subsequently, it is difficult to change or delete the block. Therefore, a lack of a trust capability in a communication network can be effectively compensated for by using a natural trust attribute of the blockchain. The following briefly describes integration of a blockchain and a 6G communication network.

6. Integration of a blockchain and a 6G communication network: Application of the blockchain to the 6G communication network (or a future communication network) may provide new ideas and more possibilities for enhancing security and trustworthiness and cross-industry and cross-domain management for the 6G communication network. Depending on features of the blockchain technology, the blockchain may be used as a unified trusted platform to implement historical event tracing and automatic network management, such as log audit, automatic settlement, and secure access and verification.

Specifically, the integration of the blockchain and the 6G communication network may provide the following two requirements:
(1) Blockchain resource service.

Due to a requirement of a communication network, an operator has service data of a terminal, such as user profile (profile) information, location information, identification (identify, ID) information, public land mobile network (Public Land Mobile Network, PLMN) information, and service information. The blockchain may provide a core network element with personal information related to the core network element for use.

In addition, the blockchain may also collect various types of sensing and mapping data as services and provide the services for the core network element, for example, road condition information, traffic information, and environment information in internet of vehicles. The operator may establish a secure and tamper-proof data sharing platform for the core network element by using the blockchain.

(2) The blockchain requires a core network element to report information such as an environment, a key performance indicator (Key Performance Indicator, KPI), and mapping.

KPI indicator data information generated by actual operations in a conventional network is mainly collected locally by a base station, then directly reported to a local sub-network management and database system through a private interface, and next reported to a higher-level network management and data center through hierarchical summary statistics. By using a blockchain technology, the core network element may report various types of network KPI data in real time (for example, to a blockchain or a network).

New services require a large amount of user mapping data. For example, sensors of test vehicles usually capture images and information of other vehicles, pedestrians, and bicycles, and traffic signs, traffic lights, roadsides, lanes, other infrastructure, and road landscapes. In the IoT network, humidity, temperature, and environment conditions of the environment are measured. The network may record and store mapping data by using the blockchain.

7. Smart contract: The smart contract is a computer protocol intended to disseminate, verify, or execute a contract in an informatization manner. The smart contract allows trusted transactions to be performed without a third party. These transactions are traceable and irreversible. Permission to invoke a smart contract in embodiments of this application is similar to a "write" operation. To be specific, data on-chain may be directly "writing" data to a blockchain, or may be implemented by invoking a smart contract.

8. Token verification: A token is a string of characters generated by a server as a token for a client to request. After a first login, the server generates token information and returns the token information to the client, so that the client only needs to use the token information to request data, without using a user name and a password.

It can be learned from the foregoing descriptions that the blockchain is integrated with the 6G communication network, and the blockchain may provide functions such as a resource service and information reporting. Currently, a related technology in which the blockchain is integrated with the 6G communication network involves only on-chain of subscription data of the terminal device, and does not involve access of the core network element (such as the AMF, the SMF, the UPF, or the NEF) to the blockchain. This application provides a communication method, to support a core network element in a communication system to access a blockchain, thereby helping an operator establish a secure and tamper-proof data sharing platform for the core network element by using the blockchain.

The foregoing describes the scenario to which embodiments of this application can be applied with reference to FIG. 1, and further briefly describes the basic concepts in this application. The following describes in detail a communication method provided in this application with reference to the accompanying drawings.

A specific structure of an execution body of a method provided in embodiments of this application is not particularly limited in the following embodiments provided that communication can be performed according to the method provided in embodiments of this application by running a program that records code of the method provided in embodiments of this application. For example, the method provided in embodiments of this application may be performed by a core network device, or a functional module that is in the core network device and that can invoke and execute the program.

For ease of understanding of embodiments of this application, the following descriptions are provided.

First, in this application, "indicate" may be understood as "enable", and "enable" may include "directly enable" and "indirectly enable". When a piece of information is described to enable A, it may indicate that the information directly enables A or indirectly enables A, but it does not indicate that A is definitely carried in the information.

Information enabled by the information is referred to as to-be-enabled information. In a specific implementation process, the to-be-enabled information is enabled in many manners, for example, including but not limited to the following: The to-be-enabled information may be directly enabled, for example, the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, so as to reduce enabling overheads to some extent. In addition, a common part of all information may be identified and enabled in a unified manner, so as to reduce enabling overheads caused by enabling the same information separately.

Second, various numeric numbers such as first and second (for example, "#1" and "#2") shown in this application are merely for ease of description, and are used to distinguish between objects, but are not intended to limit the scope of embodiments of this application, for example, are used to distinguish between different messages, but are not used to describe a particular order or sequence. It should be understood that the objects described in such a way are interchangeable in a proper circumstance, so that a solution other than embodiments of this application can be described.

Third, in this application, "preset" may include "predefined", for example, defined in a protocol. "Predefined" may be implemented in a manner of storing corresponding code, a table or other related information that may be used for indication in a device (for example, including network elements) in advance. A specific implementation of "predefined" is not limited in this application.

Fourth, "stored" in embodiments of this application may be "stored in one or more memories". The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification usually indicates an "or" relationship between associated objects.

Sixth, "protocols" in embodiments of this application may be standard protocols in the communication field, for example, may include a 6G protocol, a new radio (new radio, NR) protocol, and a related protocol applied to a future communication system. This is not limited in this application.

Seventh, that one piece of information (for example, information #1) "includes" another piece of information (for example, information #2) in embodiments of this application may be understood as that the information #1 explicitly or implicitly carries the information #2. For example, the information #1 directly carries the information #2. For another example, the information #1 carries indication information indicating the information #2, and a receive end device receiving the information #1 may obtain the information #2 based on the indication information. The indication information indicating the information #2 may be predefined or specified in a protocol, or may be explicitly or implicitly indicated.

Without loss of generality, the following uses interaction between network elements as an example to describe in detail the communication method provided in embodiments of this application. The communication method is applied to a scenario in which a blockchain is integrated with a communication system (for example, a 6G communication system) (for example, the scenario shown in FIG. 1). FIG. 2 is a schematic flowchart of a communication method according to an embodiment of this application. The method includes the following step:

S210: A second network element sends an access request to a first network element, or a first network element receives an access request from a second network element.

For example, the first network element is a functional network element that has functions of access authorization and management for a blockchain. The first network element includes but is not limited to a network element such as an LAF, an AMF, an AUSF, or an SEAF. It should be understood that a name of the first network element is not limited in this embodiment of this application.

In a possible implementation, when the LAF and the AMF (or the SEAF/AUSF) are integrated, that is, a function of the LAF is integrated into the AMF (or the SEAF/AUSF), the first network element may be the AMF (or the SEAF/AUSF).

In another possible implementation, when the LAF is independently disposed, the first network element may be the LAF.

For example, the second network element may be a core network element other than the first network element in a communications system, and includes but is not limited to an AMF, an SMF, a UPF, an NEF, or the like.

For ease of description, in this embodiment of this application, an example in which the LAF is independently disposed and the first network element is the LAF is used for description, and an example in which the second network element is collectively referred to as a network function (network function, NF) network element is used for description.

Specifically, the access request includes an identifier of a first blockchain, and is used to request to access the first blockchain. Accessing the first blockchain may be that the second network element needs to send second data to the first blockchain, or may be that the second network element needs to obtain first data from the first blockchain, or may be that the second network element invokes a smart contract on the first blockchain.

For example, when determining that the first blockchain needs to be accessed, the second network element generates the access request.

In a possible implementation, the second network element may determine, based on local configuration information, that the first blockchain needs to be accessed. For example, the configuration information indicates the second network element to store specific data in the first blockchain.

In another possible implementation, the second network element may determine, based on an indication of another device, that the first blockchain needs to be accessed. For example, the second network element receives indication information of the another device that indicates to obtain information from the first blockchain.

It should be noted that, in this embodiment of this application, how the second network element determines to access the first blockchain is not limited. The second network element may determine to access the first blockchain in any case in which the first blockchain needs to be accessed.

In addition, it should be noted that the first blockchain may be one or more blockchains. In other words, the second network element may determine to initiate access to a plurality of blockchains. For ease of description, blockchains that need to be accessed by the second network element are collectively referred to as the first blockchain.

For example, an identifier of the first blockchain may be an ID of the first blockchain, or an ID of a blockchain group to which the first blockchain belongs.

For example, if a terminal device determines that the blockchains that need to be accessed include a blockchain #1, a blockchain #2, and a blockchain #3, where an ID of the blockchain #1 is an ID #1, an ID of the blockchain #2 is an ID #2, and an ID of the blockchain #3 is an ID #3, the identifier of the first blockchain may be the ID #1, the ID #2, and the ID #3.

For ease of understanding, a possible form of the identifier of the first blockchain accessed by the terminal device at a granularity of a single blockchain is described with reference to Table 1:

**Table 1**

| Information about the first blockchain | Blockchain | Address |
|---|---|---|
| ID #1 | Ledger #1 | IP #1-1 or IP #1-2 |
| ID #2 | Ledger #2 | IP #2-1 |
| ID #3 | Ledger #3 | IP #3-1 or IP #3-2 |

As shown in Table 1, a blockchain may correspond to a plurality of addresses (for example, the ledger #1 corresponds to the IP #1-1 and the IP #1-2). It may be understood that the blockchain includes a plurality of nodes, and IP addresses of the nodes are different. For example, the ledger #1 includes a node #1 and a node #2, where an address of the node #1 is the IP #1-1, and an address of the node #2 is the IP #1-2.

For another example, if a terminal device determines that the blockchains that need to be accessed include a blockchain #1, a blockchain #2, and a blockchain #3, where the blockchain #1, the blockchain #2, and the blockchain #3 belong to a blockchain group #1, and an identifier of the blockchain group #1 is a group ID #1, the identifier of the first blockchain may be the group ID #1.

For ease of understanding, a possible form of the identifier of the first blockchain accessed by the terminal device at a granularity of a blockchain group is described with reference to Table 2:

**Table 2**

| Information about the first blockchain | Blockchain | Address |
|---|---|---|
| Group ID #1 | Ledger #1, Ledger #2, Ledger #3 | IP #1-1 or IP #1-2, IP #2-1, IP #3-1 or IP #3-2 |
| Group ID #2 | Ledger #2, Ledger #4 | IP #2-1, IP #4-1, IP #4-2, or IP #4-3 |
| Group ID #3 | Ledger #5 | IP #5-1 |

It should be understood that the identifier of the first blockchain is not limited in this embodiment of this application. The identifier of the first blockchain and the identifier of the blockchain group to which the first blockchain belongs are merely examples, and do not constitute any limitation on the protection scope of this application. Other identifiers that can identify the first blockchain also fall within the protection scope of this application, for example, type indication information of the first blockchain.

Optionally, the access request may further include an identifier of the second network element and/or information indicating an access type. The identifier of the second network element identifies the second network element, and includes but is not limited to an ID of the second network element, type indication information of the second network element, and the like. The access type includes reading (for example, obtaining first data from the first blockchain), writing (for example, sending second data to the first blockchain), or invoking a smart contract.

In a possible implementation, the access request may be referred to as a token request, and is used to implement token verification.

In another possible implementation, the access request may be a request message based on another verification manner, so as to authenticate the second network element.

For example, in this embodiment, an example in which the access request is a token request is used for description.

Optionally, the first network element may verify the foregoing access request, to determine whether the second network element has permission to access the first blockchain. The method procedure shown in FIG. 2 further includes the following steps.

S220: The first network element verifies the access request.

For example, the access request carries integrity protection and a signature, and after receiving the access request, the first network element verifies the signature and integrity of the access request; and/or the access request may be encrypted by using a symmetric or asymmetric key, and after receiving the access request, the first network element decrypts the access request.

It should be noted that each interaction message in this application may carry integrity protection and a signature, and a peer end that receives the message performs a corresponding action after verifying the signature and integrity of the message; and/or each interaction message in this application may be encrypted by using a symmetric or asymmetric key, and a peer end performs a response action after decryption. Encryption or decryption of the following message is not described again.

S230: The first network element sends an access response to the second network element, or the second network element receives an access response from the first network element.

The access response includes information used to verify whether the second network element can access the first blockchain.

In this embodiment, a case in which the first network element determines, after the verification on the access request succeeds, that the second network element has permission to access the first blockchain is mainly considered. In this case, the first network element generates token information after the verification on the second network element succeeds. The access response includes the token information, where the token information includes but is not limited to the identifier of the second network element, the identifier of the first blockchain, the access type, an expiration time, a signature, and the like.

Specifically, after the second network element receives the token information, the method procedure shown in FIG. 2 further includes the following steps.

S240: The second network element sends a third request to the first blockchain, or the first blockchain receives a third request from the second network element.

The third request is used to request to obtain the first data on the first blockchain, or is used to request to send second data to the first blockchain. Specifically, the third request includes the token information.

When the third request is used to request to send the second data to the first blockchain, the third request carries the second data.

S250: The first blockchain determines whether the second network element has request permission.

Specifically, the first blockchain verifies the token information carried in the third request, to determine whether the second network element has permission to obtain the first data on the first blockchain, or determine whether the second network element has permission to send the second data to the first blockchain.

S260: The first blockchain sends a third response to the second network element, or the second network element receives a third response from the first blockchain.

The third response indicates that the third request succeeds or fails.

For example, if the third request is used to request to obtain the first data on the first blockchain, and the third response indicates that the first data on the first blockchain is successfully obtained, the third response carries the first data.

For example, if the third request is used to request to send the second data to the first blockchain, and the third request includes the second data, the third response indicates that the second data is successfully on-chained or fails to be on-chained.

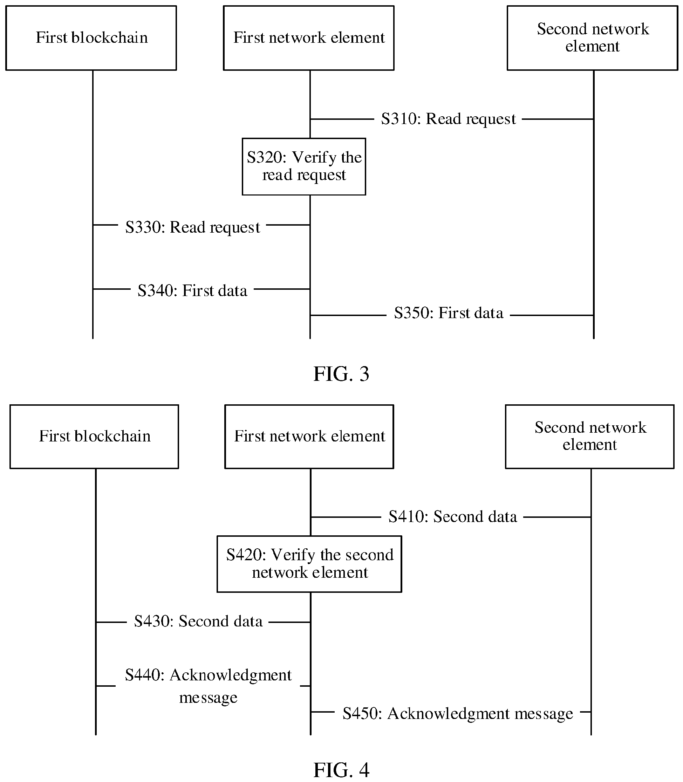

The method procedure shown in FIG. 2 mainly describes the solution in which the first network element generates the token information and delivers the token information, and the first blockchain verifies the token information. This application further provides another method for authenticating a core network element. The first network element authenticates whether the core network element can obtain the first data on the first blockchain. The following describes the method for authenticating a core network element with reference to FIG. 3. For ease of description, an example in which the core network element is the second network element is still used for description. It should be understood that the second network element shown in FIG. 3 is merely an example, and does not necessarily indicate that the second network element shown in FIG. 3 is a same core network element as that shown in FIG. 2. FIG. 3 is a schematic flowchart of another communication method according to an embodiment of this application. The method includes the following step:

S310: A second network element sends a read request to a first network element, or a first network element receives a read request from a second network element.

The read request is used to request to obtain first data on a blockchain (for example, a first blockchain), and the read request includes an identifier of the first blockchain. It should be understood that the first blockchain is merely an example, and the second network element may request to obtain data on any blockchain.

For example, the read request further includes at least one of the following information:
an identifier of a transaction, an identifier of a block, a world status, or an index.

The identifier of the transaction indicates a transaction (or a type of transaction), and includes but is not limited to a transaction format, a transaction type, and the like. It should be understood that the transaction indicated by the identifier of the transaction may be a transaction having a specific feature, and is not limited to a specific transaction.

The identifier of the block indicates a block (or a type of block), and includes but is not limited to a block (or a type of block) on a blockchain. It should be understood that the block indicated by the identifier of the block may be a block having a specific feature, and is not limited to a specific block.

The world status indicates an overall status of a blockchain, for example, account information and an account status. The account information may be an identifier of an account.

The index may indicate an index of information, for example, a keyword.

For example, the identifier of the first blockchain, the identifier of the transaction, the identifier of the block, the world status, or the index included in the read request may be used as a key of the read request.

Optionally, the first network element may verify the foregoing read request, to determine whether the second network element has permission to obtain the first data on the first blockchain. The method procedure shown in FIG. 3 further includes the following step:
S320: The first network element verifies the read request.

When the second network element has the permission to obtain the first data on the first blockchain, the method procedure shown in FIG. 3 further includes the following steps:
S330: The first network element sends the read request to the first blockchain, or the first blockchain receives the read request from the first network element.
S340: The first blockchain sends the first data to the first network element, or the first network element receives the first data from the first blockchain.
S350: The first network element sends the first data to the second network element, or the second network element receives the first data from the first network element.

FIG. 3 shows a case in which a core network element reads data on a blockchain. The core network element may further link the data to the blockchain. The following describes a method for on-chain of the data of the core network element with reference to FIG. 4. For ease of description, an example in which the core network element is the second network element is still used for description. It should be understood that the second network element shown in FIG. 4 is merely an example, and does not necessarily indicate that the second network element shown in FIG. 4 is a same core network element as that shown in FIG. 2 (or FIG. 3). FIG. 4 is a schematic flowchart of still another communication method according to an embodiment of this application. The method includes the following step:
S410: A second network element sends second data to a first network element, or a first network element receives second data from a second network element.

Specifically, when sending the second data to the first network element, the second network element may further send an identifier of a blockchain (for example, an identifier of a first blockchain) and at least one of the following information to the first network element:
an identifier of the second network element, an identifier of a transaction, an identifier of a block, a world status, or an index.

It should be understood that the first blockchain is merely an example, and the second network element may send data to any blockchain.

For example, the identifier of the first blockchain, the identifier of the transaction, the identifier of the block, the world status, or the index may be used as a key of a read request.

Optionally, the first network element may determine whether the second network element has permission to send the second data to the first blockchain. The method procedure shown in FIG. 4 further includes the following step:
S420: The first network element verifies the second network element.

When the second network element has the permission to send the second data to the first blockchain, the method procedure shown in FIG. 4 further includes the following steps:
S430: The first network element sends the second data to the first blockchain, or the first blockchain receives the second data from the first network element.
S440: The first blockchain sends an acknowledgment message to the first network element, or the first network element receives an acknowledgment message from the first blockchain.
S450: The first network element sends the acknowledgment message to the second network element, or the second network element receives the acknowledgment message from the first network element.

For example, that the second network element obtains first data on the first blockchain directly (for example, the third response carries the first data in step S260) or indirectly (for example, the first network element sends the first data to the second network element in step S350) may be that the second network element determines, based on a configuration message, that the first data on the first blockchain needs to be obtained.

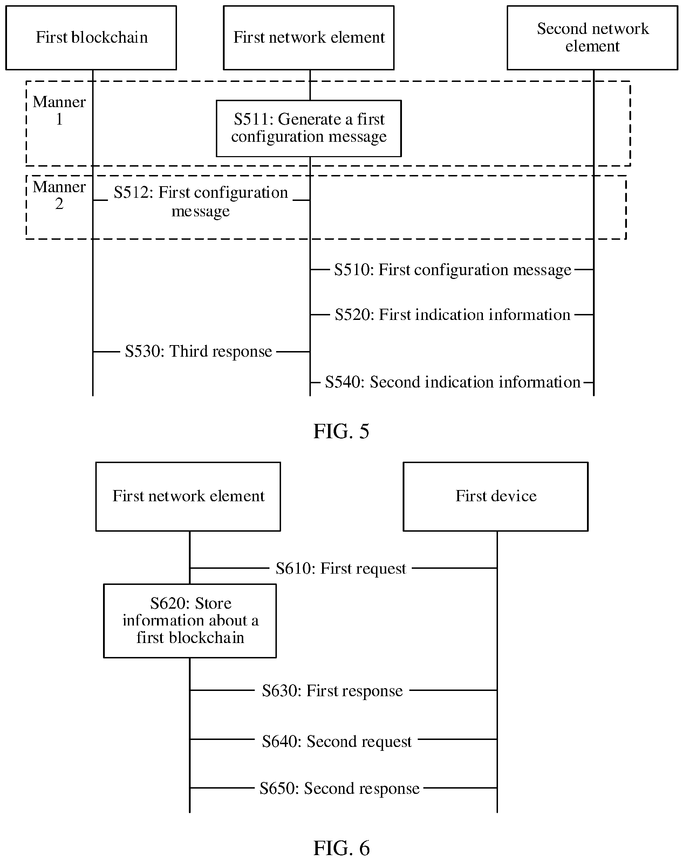

In addition/Optionally, that the second network element sends the second data to the first blockchain directly (for example, the third request carries the second data in step S240) or indirectly (for example, the first network element sends the second data to the first blockchain in step S430) may be that the second network element determines, based on a configuration message, that the second data needs to be sent to the first blockchain. The following describes in detail a configuration procedure of a core network element with reference to FIG. 5. For ease of description, an example in which the core network element is the second network element is still used for description. It should be understood that the second network element shown in FIG. 5 is merely an example, and does not necessarily indicate that the second network element shown in FIG. 5 is a same core network element as that shown in FIG. 2. FIG. 5 is a schematic flowchart of still another communication method according to an embodiment of this application. The method includes the following step:
S510: A first network element sends a first configuration message to a second network element, or a second network element receives a first configuration message from a first network element.

The first configuration message includes at least one of the following information:
an identifier corresponding to a first configuration, an identifier of a first blockchain, an identifier of the second network element, an address of the first blockchain, a format of first data, or a type of the first data.

For example, the first configuration message includes: the ID of the first configuration, identifying a current configuration; a message type: configuration activation; a configured blockchain: a BC ID; a device that accepts the configuration: the identifier of the second network element, for example, the identifier of the second network element on the blockchain; an address of the blockchain: a chain IP; a transaction format; cryptography-related information, for example, encryption, hash, and a signature algorithm; a reporting type, for example, reporting based on a timer or a counter, reporting based on a periodicity, or reporting based on a trigger; and a reporting manner, for example, directly releasing a transaction (writing) or invoking a smart contract. The first configuration message further includes transmitted data content, for example, service-related data (a network element log); device information (hardware information and a security capability of a network element); security information (trusted computing remote attestation information and a remote attestation result); network KPI information (cell load, spectrum usage, and key behavior of the second network element); and network element certificate information.

Specifically, in this embodiment, the first network element learns of the first configuration message in the following two manners:
Manner 1: The first network element generates the first configuration message.

In Manner 1, the method procedure shown in FIG. 5 further includes the following step:
S511: The first network element generates the first configuration message.

After the blockchain registers information about the blockchain with the first network element, the first network element identifies a corresponding network element (for example, the second network element) based on the information about the blockchain, and generates the first configuration message.

For example, information about the first blockchain includes a type of data stored on the first blockchain, and the first network element may determine, based on the information, network elements that can obtain corresponding data from the first blockchain.

For another example, information about the first blockchain includes a type of data required by the first blockchain, and the first network element may determine, based on the information, that the data required by the first blockchain can be obtained from the network element.

Manner 2: The first network element receives the first configuration message from the blockchain.

In Manner 1, the method procedure shown in FIG. 5 further includes the following step:

S512: The first network element receives the first configuration message from the first blockchain, or the first blockchain sends the first configuration message to the first network element.

For example, the first configuration message is carried in the information about the first blockchain, and is sent to the first network element in a registration process.

For example, the first blockchain releases information that needs to be collected, an involved network element, and a reporting policy to the first network element by using the information about the first blockchain.

Specifically, the second network element may notify, by using first indication information, the first network element of whether the configuration succeeds. The method procedure shown in FIG. 5 further includes the following step:
S520: The second network element sends the first indication information to the first network element, or the first network element receives the first indication information data from the second network element.

The first indication information indicates that the first configuration succeeds or fails.

S530: The first network element sends a third response to the first blockchain, or the first blockchain receives a third response from the first network element.

When the first indication information indicates that the first configuration succeeds, the third response includes information about a third network element.

When the first indication information indicates that the first configuration fails, the third response indicates that the configuration fails.

Further, after the first configuration is completed, second indication information may indicate that the first configuration changes.

For example, the first network element or the second network element may indicate, by using the second indication information, any one of the following: indicating to update the first configuration, indicating to suspend the first configuration, indicating to cancel the first configuration, or indicating to resume the first configuration. In this case, the method procedure shown in FIG. 5 further includes the following step:
S540: The first network element sends the second indication information to the second network element, or the second network element sends the second indication information to the first network element.

In a possible implementation, the second indication information indicates to update the first configuration, and the second indication information includes at least one of the following information:
the ID of the first configuration, indicating an updated configuration; an information type: configuration update; a configured blockchain: a BC ID; a device that accepts the configuration: the identifier of the second network element, for example, the identifier of the second network element on the blockchain; an address of the blockchain: a chain IP; a transaction format; cryptography-related information, for example, encryption, hash, and a signature algorithm; a reporting type, for example, reporting based on a timer or a counter, reporting based on a periodicity, or reporting based on a trigger; and a reporting manner, for example, directly releasing a transaction (writing) or invoking a smart contract. The second indication information further includes transmitted data content and the like.

It may be understood that updating the first configuration is similar to configuring first configuration, and a difference lies in that updating is to reconfigure the existing configuration.

In another possible implementation, the second indication information indicates to suspend the first configuration, and the second indication information includes at least one of the following information:
the ID of the first configuration, indicating an updated configuration; an information type: configuration suspension; a configured blockchain: a BC ID; a device that accepts the configuration: the identifier of the second network element, for example, the identifier of the second network element on the blockchain.

In still another possible implementation, the second indication information indicates to cancel the first configuration, and the second indication information includes at least one of the following information:
the ID of the first configuration, indicating an updated configuration; an information type: configuration cancellation; a configured blockchain: a BC ID; a device that accepts the configuration: the identifier of the second network element, for example, the identifier of the second network element on the blockchain.

In still another possible implementation, the second indication information indicates to resume the first configuration, and the second indication information includes at least one of the following information:
the ID of the first configuration, indicating an updated configuration; an information type: configuration resumption; a configured blockchain: a BC ID; a device that accepts the configuration: the identifier of the second network element, for example, the identifier of the second network element on the blockchain.

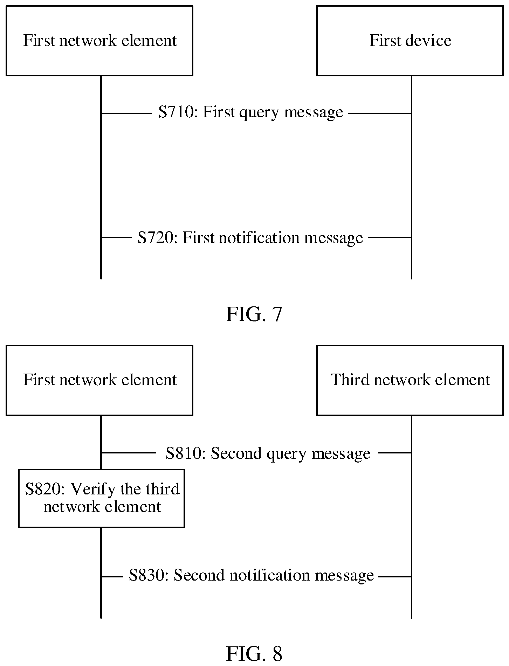

In addition, in this application, information about a blockchain may be registered with a first network element and managed by the first network element. The following describes in detail a case in which the information about the blockchain is registered with the first network element with reference to FIG. 6 and FIG. 7. FIG. 6 is a schematic flowchart of still another communication method according to an embodiment of this application. The method includes the following step:
S610: A first device sends a first request to a first network element, or a first network element receives a first request from a first device.

The first request is used to request to register a blockchain (for example, a first blockchain) with the first network element, and the first request includes information about the first blockchain. It should be understood that the first blockchain is merely an example, and information about any blockchain may be registered with the first network element.

The information about the first blockchain includes at least one of the following:
an identifier of the first blockchain, an address of the first blockchain, an authentication mechanism of the first blockchain, a member of the first blockchain, a type of the first blockchain, a type of data stored on the first blockchain, a status of the first blockchain, a policy and configuration corresponding to a core network element, a policy and configuration corresponding to a terminal device, or a policy and configuration corresponding to a third-party device.

The information about the blockchain in this application may be understood as a registration file of the blockchain, and the registration file includes at least one of the following information:
basic blockchain information, blockchain on-chain policy information, or blockchain status management view information.

The basic blockchain information includes but is not limited to: a ledger ID (Ledger ID), a channel ID (Channel ID), a ledger type (Ledger type), a ledger state (Ledger state) (for example, a transactions per second (Transactions per second, TPS) state or an active account state), a ledger member (Members of the Committee), an IP address (IP addresses), a fully qualified domain name (Fully Qualified Domain Name, FQDN) of a full/archive node (the full/archive nodes), a consensus mechanism (Consensus mechanism), ledger application related information (Ledger application related information), a ledger architecture (Ledger architecture), authentication mechanism (Authentication mechanism), and the like.

The blockchain policy information includes but is not limited to: a required information type, a policy for triggering on-chain of data of a terminal device or an access network device (for example, a time interval-based on-chain policy, a preconfigured on-chain policy, a location information-based on-chain policy, or a terminal device selection policy), a policy for on-chain of network element data (for example, a time interval-based policy, a preconfigured policy, a servicetriggered policy, or a network KPI-based policy), whether access is opened to a third party, an open policy, and the like.

The chain status management view information includes but is not limited to: a trusted execution environment, a trusted hardware platform execution status, performance monitoring data of a Linux system (such as CPU usage and memory usage of the Linux system), log data (such as a Docker run log, a fabric run log, and an error log), monitoring and operations and maintenance (such as a blockchain network status, a block height, chaincode, and on-chain data), service data (such as channel data, transaction data, and data stored on the blockchain), compliance audit (such as compliance audit for a consortium blockchain network, setting up a sensitive word library to prevent on-chain of illegal information, setting up a complaint reporting mechanism, and joint supervision of initiators and participants, and maintaining data security of a consortium blockchain), and blockchain governance (such as freezing, unfreezing, deregistering, updating, or maintaining each chain).

The first device may be a network management system or a management node on the first blockchain.

After receiving the first request, the first network element may locally store the information about the first blockchain. The method procedure shown in FIG. 6 further includes the following steps:
S620: The first network element stores the information about the first blockchain.
S630: The first network element sends a first response to the first device, or the first device receives a first response from the first network element.

The first response indicates that the registration of the first blockchain succeeds or fails.

Optionally, after the information about the first blockchain is successfully registered, the information about the first blockchain may be updated or deleted by using a second request. The method procedure shown in FIG. 6 may further include the following steps.

S640: The first device sends the second request to the first network element, or the first network element receives the second request from the first device.

The second request is used to request to update the information about the first blockchain or delete the information about the first blockchain.

When the second request is used to request the first network element to update the information about the first blockchain, the second request includes updated information about the first blockchain.

When the second request is used to request the first network element to delete (or deregister) the information about the first blockchain, the second request includes the identifier of the first blockchain.

S650: The first network element sends a second response to the first device, or the first device receives a second response from the first network element.

The second response indicates that the information about the first blockchain is successfully updated or deleted, or indicates that the information about the first blockchain fails to be updated or deleted.

As described in the method procedure shown in FIG. 6, the first device actively registers, updates, or deletes the information about the first blockchain. This application further provides a communication method in which a first network element may actively obtain a status of a first blockchain, which is described below with reference to FIG. 7. FIG. 7 is a schematic flowchart of still another communication method according to an embodiment of this application. The method includes the following steps.

S710: A first network element sends a first query message to a first device, or a first device receives a first query message from a first network element.

The first query message is used to query a status of a blockchain (for example, a first blockchain). The status of the first blockchain includes: information about the first blockchain is to be registered, information about the first blockchain is to be updated, or formation about the first blockchain is to be deleted. It should be understood that the first blockchain is merely an example, and the first network element may query a status of any blockchain.

S720: The first device sends a first notification message to the first network element, or the first network element receives a first notification message from the first device.

When the status of the first blockchain is that the information about the first blockchain is to be registered, the first notification message includes the information about the first blockchain, and the first network element stores the information about the first blockchain.

When the status of the first blockchain is that the information about the first blockchain is to be updated, the first notification message includes the information about the first blockchain, and the first network element overwrites locally stored information about the first blockchain with the information about the first blockchain.

When the status of the first blockchain is that the information about the first blockchain is to be deleted, indication information is deleted from the first notification message, and the first network element deletes locally stored information about the first blockchain.

Specifically, the first network element locally stores information about a blockchain, and a core network element may query the information about the blockchain that is locally stored in the first network element. The following describes in detail a procedure in which the core network element queries the first network element for the information about the blockchain with reference to FIG. 8. FIG. 8 is a schematic flowchart of still another communication method according to an embodiment of this application. The method includes the following steps.

S810: A third network element sends a second query message to a first network element, or a first network element receives a second query message from a third network element.

For example, the third network element retrieves registration information and policy information of a node on a blockchain (for example, a first blockchain) based on name or ID information of the first blockchain, for example, a routing policy, an IP address, whether the third network element needs to report information, and a reporting policy. It should be understood that the first blockchain is merely an example, and the third network element may query information about any blockchain.

The second query message is used to query information about the first blockchain, and the second query message includes an identifier of the first blockchain.

Optionally, the second query message includes to-be-queried data, for example, an IP address of a full node.

S820: The first network element verifies the third network element.

The first network element determines whether the third network element has permission to query the information about the first blockchain.

S830: The first network element sends a second notification message to the third network element, or the third network element receives a second notification message from the first network element.

The second notification message includes the information about the first blockchain, or information indicating that the query fails.

Optionally, when the second notification message includes the information indicating that the query fails, the second notification message may further include information indicating a reason why the query fails, for example, a verification failure.

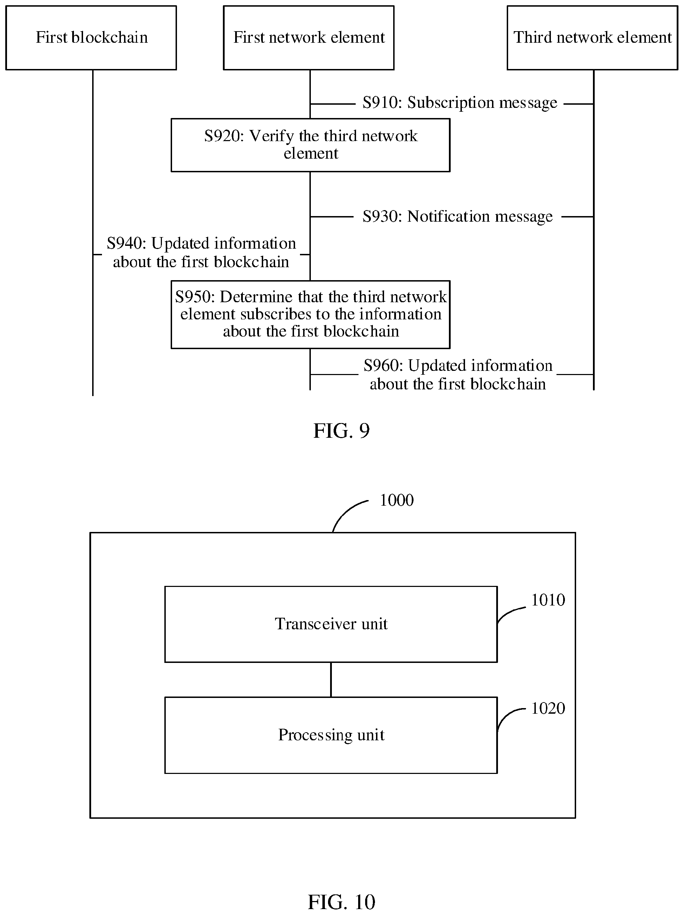

Specifically, a core network element may further subscribe to information about a blockchain that is locally stored in the first network element. The following describes in detail a procedure in which the core network element subscribes to the information about the blockchain from the first network element with reference to FIG. 8. FIG. 9 is a schematic flowchart of still another communication method according to an embodiment of this application. The method includes the following steps.

S910: A third network element sends a subscription message to a first network element, or a first network element receives a subscription message from a third network element.

The subscription message is used to subscribe to information about a blockchain (for example, a first blockchain), and the subscription message includes an identifier of the first blockchain. It should be understood that the first blockchain is merely an example, and the third network element may subscribe to information about any blockchain.

S920: The first network element verifies the third network element.

The first network element determines whether the third network element has permission to subscribe to the information about the first blockchain.

S930: The first network element sends a notification message to the third network element, or the third network element receives a notification message from the first network element.

The notification message includes information indicating that the subscription succeeds or the subscription fails.

Optionally, when the notification message includes the information indicating that the subscription fails, the notification message may further include information indicating a failure cause, for example, indicating that the third network element does not have subscription permission.

Optionally, when information about a blockchain (or some blockchains) (for example, the first blockchain shown in FIG. 9) locally stored in the first network element is updated, the first blockchain sends updated information about the blockchain to the first network element. The method procedure shown in FIG. 9 further includes the following steps.

S940: The first blockchain sends the updated information about the first blockchain to the first network element, or the first network element receives the updated information about the first blockchain from the first blockchain.

For example, when the first network element locally stores information #1 of the first blockchain, and the information #1 of the first blockchain is updated to information #2 of the first blockchain, the first blockchain sends the information #2 of the first blockchain to the first network element. The information #2 of the first blockchain overwrites the information #1 of the first blockchain that is locally stored in the first network element, and is used as latest status information of the first blockchain.

S950: The first network element determines that the third network element subscribes to the information about the first blockchain.

Specifically, the first network element can identify a network element (for example, the third network element) that subscribes to the information about the first blockchain.

S960: The first network element sends the updated information about the first blockchain to the third network element, or the third network element receives the updated information about the first blockchain from the first network element.

It should be understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

For example, the configuration procedure shown in FIG. 5 may be combined with the authentication procedure shown in FIG. 2 (or FIG. 3 or FIG. 4), so that the blockchain is accessed based on the configuration after the authentication, thereby improving security assurance.

It should be further understood that, in some of the foregoing embodiments, a device (for example, a core network device) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by the device (for example, the core network device) may also be implemented by a component (for example, a chip or a circuit) of the device.

The communication methods provided in embodiments of this application are described above in detail with reference to FIG. 2 to FIG. 9. The foregoing communication methods are mainly described from a perspective of interaction between network elements. It may be understood that, to implement the foregoing functions, each network element includes a corresponding hardware structure and/or software module for performing each function.

A person skilled in the art should be able to be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that this implementation goes beyond the scope of this application.

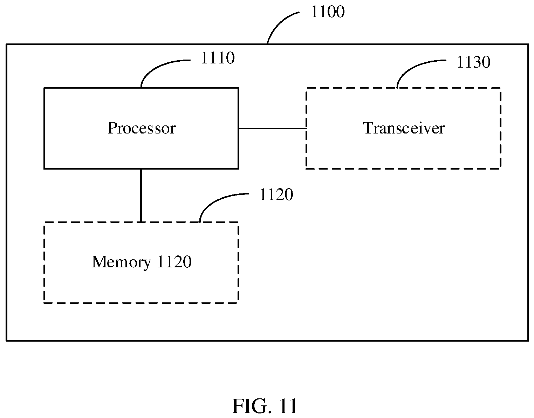

The following describes in detail a communication apparatus according to an embodiment of this application with reference to FIG. 10 and FIG. 11. It should be understood that descriptions of apparatus embodiments correspond to the descriptions of the method embodiments. Therefore, for content that is not described in detail, refer to the foregoing method embodiments. For brevity, some content is not described again.

In embodiments of this application, a transmit end device or a receive end device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used. An example in which each functional module is obtained through division based on each corresponding function is used below for description.

FIG. 10 is a block diagram of a communication apparatus 1000 according to an embodiment of this application. The apparatus 1000 includes a transceiver unit 1010 and a processing unit 1020. The transceiver unit 1010 may implement a corresponding communication function, and the processing unit 1020 is configured to perform data processing. The transceiver unit 1010 may also be referred to as a communication interface or a communication unit. When implementing an information obtaining function, the transceiver unit 1010 may also be referred to as an obtaining unit.

Optionally, the apparatus 1000 may further include a storage unit. The storage unit may be configured to store instructions and/or data. The processing unit 1020 may read the instructions and/or the data in the storage unit, so that the apparatus implements the foregoing method embodiment.

The apparatus 1000 may be configured to perform actions performed by the device (for example, the core network device or the blockchain) in the foregoing method embodiments. In this case, the apparatus 1000 may be a device or a component (for example, a chip or a circuit) that can be configured in the device. The transceiver unit 1010 is configured to perform receiving and sending related operations of the device in the foregoing method embodiment. The processing unit 1020 is configured to perform a processing related operation of the device in the foregoing method embodiments.

In a design, the apparatus 1000 is configured to perform actions performed by the first network element (for example, the LAF) in the foregoing method embodiments.

In a possible implementation,
the transceiver unit 1010 is configured to receive an access request from a second network element, where the access request is used to request to access a first blockchain, and the access request includes an identifier of the first blockchain.

The transceiver unit 1010 is further configured to send an access response to the second network element, where the access response includes information used to verify whether the second network element can access the first blockchain.

The first network element has a function of authorizing and managing the second network element to access a blockchain, and the second network element is a core network element other than the first network element in a communication system.

Optionally, the processing unit 1020 is configured to generate the information used to verify whether the second network element can access the first blockchain.

Optionally, the processing unit 1020 is configured to determine whether the second network element has permission to access the first blockchain.

In another possible implementation,
the transceiver unit 1010 is configured to receive a read request from the second network element, where the read request is used to request to obtain first data on the first blockchain, and the read request includes the identifier of the first blockchain; the transceiver unit 1010 is further configured to send the read request to the first blockchain; the transceiver unit 1010 is further configured to receive the first data from the first blockchain; and the transceiver unit 1010 is further configured to send the first data to the second network element.

Optionally, the processing unit 1020 is configured to determine whether the second network element has permission to obtain the first data on the first blockchain.

Optionally, the read request further includes at least one of the following information: an identifier of a transaction, an identifier of a block, or an identifier of an account.

In still another possible implementation,
the transceiver unit 1010 is configured to receive second data from the second network element; and the transceiver unit 1010 is further configured to send the second data to the first blockchain.

Optionally, the processing unit 1020 is configured to determine whether the second network element has permission to send the second data to the first blockchain.

In still another possible implementation,
the transceiver unit 1010 is configured to receive a first request from a first device, where the first request is used to request to register the first blockchain with the first network element, and the first request includes information about the first blockchain.

The transceiver unit 1010 is further configured to send a first response to the first device, where the first response indicates that the registration of the first blockchain succeeds or fails, where the information about the first blockchain includes least one of the following: the identifier of the first blockchain, an address of the first blockchain, an authentication mechanism of the first blockchain, a member of the first blockchain, a type of the first blockchain, a type of data stored on the first blockchain, a status of the first blockchain, a policy and configuration corresponding to a core network element, a policy and configuration corresponding to a terminal device, or a policy and configuration corresponding to a third-party device.

Optionally, the transceiver unit 1010 is further configured to receive a second request from the first device, where the second request is used to request to update the information about the first blockchain or delete the information about the first blockchain, where when the second request is used to request the first network element to update the information about the first blockchain, the second request includes updated information about the first blockchain; or when the second request is used to request the first network element to delete the information about the first blockchain, the second request includes the identifier of the first blockchain.

In still another possible implementation,
the transceiver unit 1010 is configured to send a first query message to the first device, where the first query message is used to query the status of the first blockchain; and the transceiver unit 1010 is further configured to receive a first notification message from the first device, where the first notification message includes the information about the first blockchain or deletion indication information.

In still another possible implementation,
the transceiver unit 1010 is configured to receive a second query message from a third network element, where the second query message is used to query the information about the first blockchain, and the second query message includes the identifier of the first blockchain; and the transceiver unit 1010 is further configured to send, to the third network element, the information about the first blockchain, or information indicating that the query fails.

Optionally, the processing unit 1020 is configured to determine whether the third network element has permission to query the information about the first blockchain.

In still another possible implementation,
the transceiver unit 1010 is configured to receive a subscription message from the third network element, where the subscription message is used to subscribe to the information about the first blockchain, and the subscription message includes the identifier of the first blockchain; and the transceiver unit 1010 is configured to send a notification message to the third network element, where the notification message includes the updated information about the first blockchain, or includes information indicating that the subscription fails.

Optionally, the processing unit 1020 is configured to determine whether the third network element has permission to subscribe to the information about the first blockchain.

In still another possible implementation,
the transceiver unit 1010 is configured to send a first configuration message to the second network element, where the first configuration message includes at least one of the following information: an identifier corresponding to a first configuration, the identifier of the first blockchain, an identifier of the second network element, the address of the first blockchain, a format of the first data, or a type of the first data.

Optionally, the information about the first blockchain includes the first configuration message, or the processing unit 1020 is configured to generate the first configuration message based on the information about the first blockchain.

Optionally, the transceiver unit 1010 is further configured to receive first indication information from the second network element, where the first indication information indicates that the first configuration succeeds or fails; and when the first indication information indicates that the first configuration succeeds, the transceiver unit 1010 is further configured to send a third response to the first blockchain, where the third response includes information about the third network element; or when the first indication information indicates that the first configuration fails, the transceiver unit 1010 is further configured to send a third response to the first blockchain, where the third response indicates that the configuration fails.

Optionally, the transceiver unit 1010 is further configured to send second indication information to the second network element; or the transceiver unit 1010 is further configured to receive the second indication information from the second network element, where the second indication information indicates any one of the following: indicating to update the first configuration, indicating to cancel the first configuration, indicating to suspend the first configuration, or indicating to resume the first configuration.

The apparatus 1000 may implement the steps or procedures performed by the first network element in the method embodiments according to embodiments of this application. The apparatus 1000 may include units configured to perform the methods performed by the first network element in the method embodiments. In addition, the units in the apparatus 1000 and the foregoing other operations and/or functions are respectively used to implement corresponding procedures of the first network element in the method embodiments.

When the apparatus 1000 is configured to perform the method in FIG. 2, the transceiver unit 1010 may be configured to perform receiving and sending steps in the method, for example, steps S210, S230, S240, and S260, and the processing unit 1020 may be configured to perform a processing step in the method, for example, step S220.

When the apparatus 1000 is configured to perform the method in FIG. 3, the transceiver unit 1010 may be configured to perform receiving and sending steps in the method, for example, steps S310, S330, S340, and S350, and the processing unit 1020 may be configured to perform a processing step in the method, for example, step S320.

When the apparatus 1000 is configured to perform the method in FIG. 4, the transceiver unit 1010 may be configured to perform receiving and sending steps in the method, for example, steps S410, S430, S440, and S450, and the processing unit 1020 may be configured to perform a processing step in the method, for example, step S420.

When the apparatus 1000 is configured to perform the method in FIG. 5, the transceiver unit 1010 may be configured to perform receiving and sending steps in the method, for example, steps S510, S512, S520, S530, and S540, and the processing unit 1020 may be configured to perform a processing step in the method, for example, step S511.

When the apparatus 1000 is configured to perform the method in FIG. 6, the transceiver unit 1010 may be configured to perform receiving and sending steps in the method, for example, steps S610, S630, S640, and S650, and the processing unit 1020 may be configured to perform a processing step in the method, for example, step S620.

When the apparatus 1000 is configured to perform the method in FIG. 7, the transceiver unit 1010 may be configured to perform receiving and sending steps in the method, for example, steps S710 and S720, and the processing unit 1020 may be configured to perform a processing step in the method.

When the apparatus 1000 is configured to perform the method in FIG. 8, the transceiver unit 1010 may be configured to perform receiving and sending steps in the method, for example, steps S810 and S830, and the processing unit 1020 may be configured to perform a processing step in the method, for example, step S820.

When the apparatus 1000 is configured to perform the method in FIG. 9, the transceiver unit 1010 may be configured to perform receiving and sending steps in the method, for example, steps S910, S930, S940, and S960, and the processing unit 1020 may be configured to perform processing steps in the method, for example, steps S920 and S950.

It should be understood that a specific process in which the units perform the foregoing corresponding steps is described in detail in the foregoing method embodiments. For brevity, details are not described herein again.

In another design, the apparatus 1000 is configured to perform actions performed by the second network element (for example, the LAF) in the foregoing method embodiments.

In a possible implementation,
the transceiver unit 1010 is configured to send an access request to a first network element, where the access request is used to request to access a first blockchain, and the access request includes an identifier of a third network element and an identifier of the first blockchain; and the transceiver unit 1010 is further configured to receive an access response from the first network element, where the access response includes information used to verify whether the second network element can access information about the first blockchain, where the first network element has a function of authorizing and managing the second network element to access a blockchain, and the second network element is a core network element other than the first network element in a communication system.

Optionally, the transceiver unit 1010 is configured to send a third request to the first blockchain, where the third request is used to request to obtain first data on the first blockchain, or is used to request to send second data to the first blockchain; and the transceiver unit 1010 is further configured to receive a third response from the first blockchain, where the third response indicates that the third request succeeds or fails, where the third request includes at least one of the following information: an identifier of the second network element, the identifier of the first blockchain, a type of the third request, an expiration time of the third request, or signature information of the third request.

In another possible implementation,
the transceiver unit 1010 is configured to send a read request to the first network element, where the read request is used to request to obtain the first data on the first blockchain, and the read request includes the identifier of the first blockchain; and the second network element receives the first data from the first network element.

Optionally, the read request further includes at least one of the following information: an identifier of a transaction, an identifier of a block, or an identifier of an account.

In still another possible implementation,
the transceiver unit 1010 is configured to send the second data to the first network element.

In still another possible implementation,
the transceiver unit 1010 is configured to receive a first configuration message from the first network element, where the first configuration message includes at least one of the following information: an identifier corresponding to a first configuration, the identifier of the first blockchain, the identifier of the second network element, the address of the first blockchain, a format of the first data, or a type of the first data.

Optionally, the transceiver unit 1010 is configured to send first indication information to the first network element, where the first indication information indicates that the first configuration succeeds or fails.

Optionally, the transceiver unit 1010 is further configured to receive second indication information from the first network element; or the transceiver unit 1010 is further configured to send the second indication information to the first network element, where the second indication information indicates any one of the following: indicating to update the first configuration, indicating to cancel the first configuration, indicating to suspend the first configuration, or indicating to resume the first configuration.

The apparatus 1000 may implement the steps or procedures performed by the second network element in the method embodiments according to embodiments of this application. The apparatus 1000 may include units configured to perform the methods performed by the second network element in the method embodiments. In addition, the units in the apparatus 1000 and the foregoing other operations and/or functions are respectively used to implement corresponding procedures of the second network element in the method embodiments.

When the apparatus 1000 is configured to perform the method in FIG. 2, the transceiver unit 1010 may be configured to perform receiving and sending steps in the method, for example, steps S210, S230, S240, and S260, and the processing unit 1020 may be configured to perform a processing step in the method.

When the apparatus 1000 is configured to perform the method in FIG. 3, the transceiver unit 1010 may be configured to perform receiving and sending steps in the method, for example, steps S310 and S350, and the processing unit 1020 may be configured to perform a processing step in the method.

When the apparatus 1000 is configured to perform the method in FIG. 4, the transceiver unit 1010 may be configured to perform receiving and sending steps in the method, for example, steps S410 and S450, and the processing unit 1020 may be configured to perform a processing step in the method.

When the apparatus 1000 is configured to perform the method in FIG. 5, the transceiver unit 1010 may be configured to perform receiving and sending steps in the method, for example, steps S510, S520, and S540, and the processing unit 1020 may be configured to perform a processing step in the method.

It should be understood that a specific process in which the units perform the foregoing corresponding steps is described in detail in the foregoing method embodiments. For brevity, details are not described herein again.

In still another design, the apparatus 1000 is configured to perform actions performed by the third network element in the foregoing method embodiments.

In a possible implementation,
the transceiver unit 1010 is configured to send a second query message to a first network element, where the second query message is used to query information about a first blockchain, and the second query message includes an identifier of the first blockchain; and the transceiver unit 1010 is further configured to receive, from the first network element, the information about the first blockchain, or information indicating that the query fails.

In another possible implementation,
the transceiver unit 1010 is configured to send a subscription message to the first network element, where the subscription message is used to subscribe to the information about the first blockchain, and the subscription message includes the identifier of the first blockchain; and the transceiver unit 1010 is configured to receive a notification message from the first network element, where the notification message includes updated information about the first blockchain, or includes information indicating that the subscription fails.

The apparatus 1000 may implement the steps or procedures performed by the third network element in the method embodiments according to embodiments of this application. The apparatus 1000 may include units configured to perform the methods performed by the third network element in the method embodiments. In addition, the units in the apparatus 1000 and the foregoing other operations and/or functions are respectively used to implement corresponding procedures of the third network element in the method embodiments.

When the apparatus 1000 is configured to perform the method in FIG. 8, the transceiver unit 1010 may be configured to perform receiving and sending steps in the method, for example, steps S810 and S830, and the processing unit 1020 may be configured to perform a processing step in the method.

When the apparatus 1000 is configured to perform the method in FIG. 9, the transceiver unit 1010 may be configured to perform receiving and sending steps in the method, for example, steps S910, S930, and S960, and the processing unit 1020 may be configured to perform a processing step in the method.

In still another design, the apparatus 1000 is configured to perform actions performed by the first device in the foregoing method embodiments.

In a possible implementation,
the transceiver unit 1010 is configured to send a first request to a first network element, where the first request is used to request to register a first blockchain with the first network element, and the first request includes information about the first blockchain; and the transceiver unit 1010 is configured to receive a first response from the first network element, where the first response indicates that the registration of the first blockchain succeeds or fails, where the information about the first blockchain includes at least one of the following: an identifier of the first blockchain, an address of the first blockchain, an authentication mechanism of the first blockchain, a member of the first blockchain, a type of the first blockchain, a type of data stored on the first blockchain, a status of the first blockchain, a policy and configuration corresponding to a core network element, a policy and configuration corresponding to a terminal device, or a policy and configuration corresponding to a third-party device.

Optionally, the transceiver unit 1010 is further configured to send a second request to the first network element, where the second request is used to request to update the information about the first blockchain or delete the information about the first blockchain, where when the second request is used to request the first network element to update the information about the first blockchain, the second request includes updated information about the first blockchain; or when the second request is used to request the first network element to delete the information about the first blockchain, the second request includes the identifier of the first blockchain.

In another possible implementation,
the transceiver unit 1010 is configured to receive a first query message from the first network element, where the first query message is used to query the status of the first blockchain; and the transceiver unit 1010 is further configured to send a first notification message to the first network element, where the first notification message includes the information about the first blockchain or deletion indication information.

The apparatus 1000 may implement the steps or procedures performed by the first device in the method embodiments according to embodiments of this application. The apparatus 1000 may include units configured to perform the methods performed by the first device in the method embodiments. In addition, the units in the apparatus 1000 and the foregoing other operations and/or functions are respectively used to implement corresponding procedures of the first device in the method embodiments.

When the apparatus 1000 is configured to perform the method in FIG. 6, the transceiver unit 1010 may be configured to perform receiving and sending steps in the method, for example, steps S610, S630, S640, and S650, and the processing unit 1020 may be configured to perform a processing step in the method.

When the apparatus 1000 is configured to perform the method in FIG. 7, the transceiver unit 1010 may be configured to perform receiving and sending steps in the method, for example, steps S710 and S720, and the processing unit 1020 may be configured to perform a processing step in the method.

It should be understood that a specific process in which the units perform the foregoing corresponding steps is described in detail in the foregoing method embodiments. For brevity, details are not described herein again.

In still another design, the apparatus 1000 is configured to perform actions performed by the blockchain in the foregoing method embodiments.

The transceiver unit 1010 is configured to receive a third request from a second network element, where the third request is used to request to obtain first data on the first blockchain, or is used to request to send second data to the first blockchain. The first blockchain verifies the third request to determine whether the second network element has permission to obtain the first data on the first blockchain, or determine whether the second network element has permission to send the second data to the first blockchain. The transceiver unit 1010 is configured to send a third response to the second network element, where the third response indicates that the third request succeeds or fails, where the third request includes at least one of the following information: an identifier of the second network element, an identifier of the first blockchain, a type of the third request, an expiration time of the third request, or signature information of the third request.

The apparatus 1000 may implement the steps or procedures performed by the blockchain in the method embodiments according to embodiments of this application. The apparatus 1000 may include units configured to perform the methods performed by the blockchain in the method embodiments. In addition, the units in the apparatus 1000 and the foregoing other operations and/or functions are respectively used to implement corresponding procedures of the blockchain in the method embodiments.

When the apparatus 1000 is configured to perform the method in FIG. 2, the transceiver unit 1010 may be configured to perform receiving and sending steps in the method, for example, steps S240 and S260, and the processing unit 1020 may be configured to perform a processing step in the method, for example, step S250.

When the apparatus 1000 is configured to perform the method in FIG. 3, the transceiver unit 1010 may be configured to perform receiving and sending steps in the method, for example, steps S330 and S340, and the processing unit 1020 may be configured to perform a processing step in the method.

When the apparatus 1000 is configured to perform the method in FIG. 4, the transceiver unit 1010 may be configured to perform receiving and sending steps in the method, for example, steps S430 and S440, and the processing unit 1020 may be configured to perform a processing step in the method.

When the apparatus 1000 is configured to perform the method in FIG. 5, the transceiver unit 1010 may be configured to perform receiving and sending steps in the method, for example, steps S512 and S530, and the processing unit 1020 may be configured to perform a processing step in the method.

It should be understood that a specific process in which the units perform the foregoing corresponding steps is described in detail in the foregoing method embodiments. For brevity, details are not described herein again.

The processing unit 1020 in the foregoing embodiments may be implemented by at least one processor or processor-related circuit. The transceiver unit 1010 may be implemented by a transceiver or a transceiver-related circuit. The storage unit may be implemented by at least one memory.

As shown in FIG. 11, an embodiment of this application further provides an apparatus 1100. The apparatus 1100 includes a processor 1110, and may further include one or more memories 1120. The processor 1110 is coupled to the memory 1120. The memory 1120 is configured to store a computer program or instructions and/or data. The processor 1110 is configured to execute the computer program or the instructions and/or the data stored in the memory 1120, so that the methods in the foregoing method embodiments are performed. Optionally, the apparatus 1100 includes one or more processors 1110.

Optionally, the memory 1120 and the processor 1110 may be integrated together or separately disposed.

Optionally, as shown in FIG. 11, the apparatus 1100 may further include a transceiver 1130. The transceiver 1130 is configured to receive and/or send a signal. For example, the processor 1110 is configured to control the transceiver 1130 to receive and/or send the signal.

In a solution, the apparatus 1100 is configured to implement operations performed by the device (such as the core network device or the blockchain) in the foregoing method embodiments.

An embodiment of this application further provides a computer-readable storage medium, where the computer-readable storage medium stores computer instructions used to implement the method performed by the device (such as the core network device or the blockchain) in the foregoing method embodiments.

For example, when the computer program is executed by a computer, the computer is enabled to implement the method performed by the network device in the foregoing method embodiments.

An embodiment of this application further provides a computer program product including instructions. When the instructions are executed by a computer, the computer is enabled to implement the method performed by the device (such as the core network device or the blockchain) in the foregoing method embodiments.

An embodiment of this application further provides a communication system. The communication system includes the device (such as the core network device or the blockchain) in the foregoing embodiments.

For explanations and beneficial effects of related content of any one of the apparatuses provided above, refer to the corresponding method embodiments provided above. Details are not described herein again.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example but not of limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include, but is not limited to, these memories and any memory of another suitable type.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

All or a part of the foregoing embodiments may be implemented by using software, hardware, firmware, or any combination thereof. When the software is used for implementation, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a communication system comprising at least one blockchain, wherein the method comprises:
receiving, by a first network element, an access request from a second network element, wherein the access request is used to request to access a first blockchain, and the access request comprises an identifier of the first blockchain; and
sending, by the first network element, an access response to the second network element, wherein the access response comprises information used to verify whether the second network element can access the first blockchain, wherein
the first network element has a function of authorizing and managing the second network element to access a blockchain, and the second network element is a core network element other than the first network element in the communication system.

2. The method according to claim 1, wherein the method further comprises:
determining, by the first network element, whether the second network element has permission to access the first blockchain.

3. The method according to claim 1 or 2, wherein the method further comprises:
receiving, by the first network element, a read request from the second network element, wherein the read request is used to request to obtain first data on the first blockchain, and the read request comprises the identifier of the first blockchain;
sending, by the first network element, the read request to the first blockchain;
receiving, by the first network element, the first data from the first blockchain; and
sending, by the first network element, the first data to the second network element.

4. The method according to claim 3, wherein the read request further comprises at least one of the following information:
an identifier of a transaction, an identifier of a block, or an identifier of an account.

5. The method according to any one of claims 1 to 4, wherein the method further comprises:
receiving, by the first network element, second data from the second network element; and
sending, by the first network element, the second data to the first blockchain.

6. The method according to claim 5, wherein before the sending, by the first network element, the second data to the first blockchain, the method further comprises:
determining, by the first network element, that the second network element has permission to send the second data to the first blockchain.

7. The method according to any one of claims 1 to 4, wherein the method further comprises:
receiving, by the first network element, a first request from a first device, wherein the first request is used to request to register the first blockchain with the first network element, and the first request comprises information about the first blockchain; and
sending, by the first network element, a first response to the first device, wherein the first response indicates that the registration of the first blockchain succeeds or fails, wherein
the information about the first blockchain comprises at least one of the following:
the identifier of the first blockchain, an address of the first blockchain, an authentication mechanism of the first blockchain, a member of the first blockchain, a type of the first blockchain, a type of data stored on the first blockchain, a status of the first blockchain, a policy and configuration corresponding to a core network element, a policy and configuration corresponding to a terminal device, or a policy and configuration corresponding to a third-party device.

8. The method according to claim 7, wherein the method further comprises:
receiving, by the first network element, a second request from the first device, wherein the second request is used to request to update the information about the first blockchain or delete the information about the first blockchain, wherein
when the second request is used to request the first network element to update the information about the first blockchain, the second request comprises updated information about the first blockchain; or
when the second request is used to request the first network element to delete the information about the first blockchain, the second request comprises the identifier of the first blockchain.

9. The method according to claim 7 or 8, wherein the method further comprises:
sending, by the first network element, a first query message to the first device, wherein the first query message is used to query the status of the first blockchain.

10. The method according to any one of claims 7 to 9, wherein the method further comprises:
receiving, by the first network element, a second query message from a third network element, wherein the second query message is used to query the information about the first blockchain, and the second query message comprises the identifier of the first blockchain; and
sending, by the first network element to the third network element, the information about the first blockchain, or information indicating that the query fails.

11. The method according to claim 10, wherein the method further comprises:
determining, by the first network element, whether the third network element has permission to query the information about the first blockchain.

12. The method according to any one of claims 7 to 11, wherein the method further comprises:
receiving, by the first network element, a subscription message from the third network element, wherein the subscription message is used to subscribe to the information about the first blockchain, and the subscription message comprises the identifier of the first blockchain; and
sending, by the first network element, a notification message to the third network element, wherein the notification message comprises the updated information about the first blockchain, or comprises information indicating that the subscription fails.

13. The method according to claim 12, wherein the method further comprises:
determining, by the first network element, whether the third network element has permission to subscribe to the information about the first blockchain.

14. The method according to any one of claims 1 to 13, wherein the method further comprises:
sending, by the first network element, a first configuration message to the second network element, wherein the first configuration message comprises at least one of the following information:
an identifier corresponding to a first configuration, the identifier of the first blockchain, an identifier of the second network element, the address of the first blockchain, a format of the first data, or a type of the first data.

15. The method according to claim 14, wherein the information about the first blockchain comprises the first configuration message, or the method further comprises:
generating, by the first network element, the first configuration message based on the information about the first blockchain.

16. The method according to claim 14 or 15, wherein the method further comprises:
receiving, by the first network element, first indication information from the second network element, wherein the first indication information indicates that the first configuration succeeds or fails; and
when the first indication information indicates that the first configuration succeeds, the method further comprises:
sending, by the first network element, a third response to the first blockchain, wherein the third response comprises information about the third network element; or
when the first indication information indicates that the first configuration fails, the method further comprises:
sending, by the first network element, a third response to the first blockchain, wherein the third response indicates that the configuration fails.

17. The method according to any one of claims 14 to 16, wherein the method further comprises:
sending, by the first network element, second indication information to the second network element; or
receiving, by the first network element, the second indication information from the second network element, wherein
the second indication information indicates any one of the following:
indicating to update the first configuration, indicating to cancel the first configuration, indicating to suspend the first configuration, or indicating to resume the first configuration.

18. A communication method, applied to a communication system comprising at least one blockchain, wherein the method comprises:
sending, by a second network element, an access request to a first network element, wherein the access request is used to request to access a first blockchain, and the access request comprises an identifier of a third network element and an identifier of the first blockchain; and
receiving, by the second network element, an access response from the first network element, wherein the access response indicates whether a fourth network element can access the first blockchain, wherein
the first network element has a function of authorizing and managing the second network element to access a blockchain, and the second network element is a core network element other than the first network element in the communication system.

19. The method according to claim 18, wherein when the second network element has permission to access information about the first blockchain, the method further comprises:
sending, by the second network element, a read request to the first network element, wherein the read request is used to request to obtain first data on the first blockchain, and the read request comprises the identifier of the first blockchain; and
receiving, by the second network element, the first data from the first network element.

20. The method according to claim 19, wherein the read request further comprises at least one of the following information:
an identifier of a transaction, an identifier of a block, or an identifier of an account.

21. The method according to any one of claims 18 to 20, wherein when the second network element has the permission to access the information about the first blockchain, the method further comprises:
sending, by the second network element, second data to the first network element.

22. The method according to any one of claims 18 to 21, wherein the method further comprises:
sending, by the second network element, a third request to the first blockchain, wherein the third request is used to request to obtain the first data on the first blockchain, or is used to request to send the second data to the first blockchain; and
receiving, by the second network element, a third response from the first blockchain, wherein the third response indicates that the third request succeeds or fails, wherein
the third request comprises at least one of the following information:
an identifier of the second network element, the identifier of the first blockchain, a type of the third request, an expiration time of the third request, or signature information of the third request.

23. A communication method, applied to a communication system comprising at least one blockchain, wherein the method comprises:
receiving, by a first blockchain, a third request from a second network element, wherein the third request is used to request to obtain first data on the first blockchain, or is used to request to send second data to the first blockchain;
verifying, by the first blockchain, the third request to determine whether the second network element has permission to obtain the first data on the first blockchain, or determine whether the second network element has permission to send the second data to the first blockchain; and
sending, by the first blockchain, a third response to the second network element, wherein the third response indicates that the third request succeeds or fails, wherein
the third request comprises at least one of the following information:
an identifier of the second network element, an identifier of the first blockchain, a type of the third request, an expiration time of the third request, or signature information of the third request.

24. A communication apparatus, comprising:
a unit or a module configured to perform the method according to any one of claims 1 to 17.

25. A communication apparatus, comprising:
a unit or a module configured to perform the method according to any one of claims 18 to 22.

26. A communication apparatus, comprising:
a unit or a module configured to perform the method according to claim 23.

27. A communication system, comprising:
at least one communication apparatus according to claim 24, at least one communication apparatus according to claim 25, and at least one communication apparatus according to claim 26.

28. A computer-readable storage medium, wherein the computer-readable storage medium stores program code, and when the program code is run on a communication apparatus, the method according to any one of claims 1 to 22 is performed.

29. A computer program product comprising instructions, wherein when the computer program product runs on a computer, the method according to any one of claims 1 to 22 is performed.
